# EUROPÄISCHE PATENTSCHRIFT

(11) **EP 1 476 038 B1**
(45) Veröffentlichungstag und Bekanntmachung des Hinweises auf die Patenterteilung: **10.05.2006**
(21) Anmeldenummer: 03704678.6
(22) Anmeldetag: 21.02.2003
(51) Int. Cl.: A43B 7/12, A43B 9/02, A43B 23/07

(54) **SCHUHSCHAFT UND DAMIT AUFGEBAUTES SCHUHWERK UND VERFAHREN ZU DEREN HERSTELLUNG**
SHOE SHAFT AND FOOTWEAR PRODUCED THEREWITH AND METHOD FOR PRODUCING THE SAME
TIGE DE CHAUSSURE ET CHAUSSURE FABRIQUEE AVEC CETTE TIGE, ET PROCEDE DE PRODUCTION Y RELATIF

(30) Priorität: 22.02.2002 DE 10207663
(43) Veröffentlichungstag der Anmeldung: 17.11.2004
(73) Patentinhaber: W.L. Gore & Associates GmbH, 85640 Putzbrunn (DE)
(72) Erfinder: HAIMERL, Franz, 82319 Starnberg (DE)
(74) Vertreter: Klunker . Schmitt-Nilson . Hirsch
(86) Internationale Anmeldenummer: PCT/EP2003/001811
(87) Internationale Veröffentlichungsnummer: WO 2003/070041

(56) Entgegenhaltungen:
- DE-A- 19 938 139
- DE-C- 10 003 677
- US-A- 5 433 021

## Beschreibung

Die Erfindung betrifft einen Schuhschaft und damit aufgebautes Schuhwerk, wobei der Schaft zur Erzielung von Wasserdichtigkeit mit einer wasserdichten und vorzugsweise auch wasserdampfdurchlässigen Funktionsschicht versehen ist und zusätzlich der Sohlenbereich des Schuhwerks abgedichtet ist, sowie ein Verfahren zu der Herstellung eines solchen Schaftes und solchen Schuhwerks.

Ein Beispiel derartigen Schuhwerks zeigt die EP 0 298 360 B1 der Anmelderin, wobei ein Schaftobermaterial mit einem eine wasserdichte Funktionsschicht aufweisenden Schaftfuttermaterial ausgekleidet ist. Das Schaftobermaterial ist am sohlenseitigen Ende kürzer geschnitten als das Schaftfuttermaterial, so dass sich ein Überstand des Schaftfuttermaterials über das Schaftobermaterial ergibt. Der Überstand wird von einem Netzband überbrückt, dessen eine Längsseite mit dem sohlenseitigen Ende des Schaftobermaterials, nicht jedoch mit dem Schaftfuttermaterial, und dessen andere Längsseite mit dem sohlenseitigen Ende des Schaftfuttermaterials, nicht jedoch mit dem Schaftobermaterial, vernäht ist. Das vorzugsweise aus monofilen Fasern bestehende Netzband unterbricht eine Wasserbrücke für Wasser, welches vom nass gewordenen Schaftobermaterial zum Sohlenbereich gelangt. Reichte der sohlenseitige Rand des Schaftobermaterials bis hinab zum sohlenseitigen Rand des Schaftfuttermaterials, könnte am Schaft hinab kriechendes Wasser bis zum sohlenseitigen Rand der Funktionsschicht gelangen und dort zur Futterinnenseite gelangen, was zu einem nass Werden des Schuhinnenraums führen könnte. Dieses Schuhwerk ist mit einer angespritzten Laufsohle versehen, die am unteren Schaftende eine derartige Anspritzhöhe aufweist, dass sie das Netzband und dessen Verbindungsnaht mit dem Schaftobermaterial einbettet. Das Netzband weist derartige Netzporen auf, dass das beim Anspritzen flüssige Laufsohlenmaterial das Netzband durchdringend bis zu dem Überstand des Schaftfuttermaterials vordringen und dadurch den im Bereich des Überstandes befindlichen Teil der Funktionsschicht abdichten kann. Zum Aufrechterhalten der Atmungsaktivität dieses Schuhwerks ist dessen Funktionsschicht nicht nur wasserdicht sondern auch wasserdampfdurchlässig. Dieser bekannte Aufbau hat sich sehr erfolgreich bewährt für die Herstellung von Schuhwerk, das neben Atmungsaktivität eine sehr hohe und zuverlässige Wasserdichtigkeit aufweist.

Schuhwerk mit einer ähnlichen Netzbandlösung zeigt die DE 199 38 139 A1 der Anmelderin, bei welchem der von dem Netzband überdeckte Bereich der Funktionsschicht allerdings nicht mittels Laufsohlenmaterials abgedichtet wird sondern mittels eines Reaktivschmelzklebstoffs, der im im noch nicht reagierten Zustand auf die Außenseite des Netzbandes aufgebracht wird und im ausreagierten Zustand zu Wasserdichtigkeit führt.

Mitunter ist bei diesen Lösungen störend, dass der Schaft im Bereich des Netzbandes zu Faltenbildung und Verwerfungen neigt, insbesondere an denjenigen Stellen, an welchen die Sohlenkontur des Schuhwerks einen engen Krümmungsradius aufweist, wie insbesondere im Zehen- und Fersenbereich, was ganz besonders für Kinderschuhe gilt. Erstreckt sich das Netzbandes mit seiner Querdimension in etwa senkrecht zur Laufsohle, kommt es zu Faltenbildung, weil der untere Schaftendbereich an den meisten Stellen des Schaftendbereichsumfangs nicht senkrecht von der Laufsohle hochsteht sondern mit Schrägneigung, was insbesondere für den Zehenbereich von Schuhen mit weichem Obermaterial gilt. Befindet sich das Netzband in einem parallel zur Laufsohle umgeschlagenen Bereich des unteren Schaftendbereichs, kommt es zur Faltenbildung aufgrund unterschiedlich starker Krümmung der Ränder von Obermaterialendbereich und Futtermaterialendbereich.

Bei aus der DE 195 03 405 C1 bekanntem Schuhwerk hat man versucht, dem Problem der Faltenbildung dadurch zu begegnen, dass das untere Ende des Obermaterials wie bei den vorausgehend betrachteten Beispielen bekannten Schuhwerks mit der Brandsohle über ein Netzband verbunden wird, jedoch ein die Funktionsschicht aufweisendes Futterlaminat genauso wie das Obermaterial in einem Abstand von der Brandsohle endet und mit dieser nur über Laufsohlenmaterial verbunden ist, sodass das untere Ende des Futterlaminats vor dem Anspritzen der Laufsohle frei flattern kann, was die Schuhherstellung erschwert, und dieser Sohlenaufbau nur für Schuhe mit angespritzter Laufsohle geeignet ist.

Der Erfindung liegt die Aufgabe zugrunde, hier Abhilfe zu schaffen und die Faltenbildung zu vermeiden, auch wenn sich das untere Ende der Funktionsschicht bis zum vom Schaftobermaterial abliegenden Rand des Netzbandes erstreckt.

Zur Lösung dieser Aufgabe macht die Erfindung einen Schuhschaft der im Anspruch 1 angegebenen Art und Schuhwerk der in Anspruch 25 angegebenen Art verfügbar. Die Erfindung schafft außerdem ein Verfahren zur Herstellung eines Schuhschaftes der in Anspruch 36 angegebenen Art und ein Verfahren zur Herstellung von Schuhwerk der in Anspruch 55 angegebenen Art. Hinsichtlich Weiterbildungen wird auf die abhängigen Ansprüchen verwiesen.

Ein erfindundungsgemäßer Schuhschaft umfasst ein Schaftobermaterial mit einem in einem unteren Schaftendbereich befindlichen unteren Obermaterialendbereich, ein eine wasserdichte Funktionsschicht aufweisendes, auf der Innenseite des Schaftobermaterials angeordnetes Schaftfuttermaterial mit einem unteren Futtermaterialendbereich, wobei der Futtermaterialendbereich einen nicht von Schaftobermaterial bedeckten Futterrand aufweist, und ein in Schaftendbereichsumfangsrichtung umlaufendes Verbindungsband, das an einer ersten Längsseite mit dem Obermaterialendbereich, jedoch nicht mit dem Futtermaterialendbereich, und an einer zweiten Längsseite mit dem Futtermaterialendbereich, jedoch nicht mit dem Obermaterialendbereich verbunden ist, wobei das Verbindungsband an Krümmungsstellen des unteren Schaftendbereichsumfangs einen dem örtlichen Krümmungsradius entsprechenden bogenförmigen Verlauf mit unterschiedlich starker Krümmung der beiden Verbindungsbandlängsseiten aufweist, derart, dass für einen in der jeweiligen Krümmung liegenden Bogensektor mit vorgegebenem Einheitssektorwinkel sich die zu diesem Bogensektor gehörenden Bogenlängen der beiden Verbindungsbandlängsseiten um so stärker voneinander unterscheiden, je stärker die Krümmung in dem jeweils betrachteten Bogensektor ist, wobei an Stellen mit konvexer Krümmung des unteren Schaftendbereichsumfangs die Bogenlänge der ersten Verbindungsbandlängsseite länger ist als die Bogenlänge der zweiten Verbindungsbandlängsseite, und zwar entsprechend den unterschiedlichen Krümmungs- und Bogenlinien von Obermaterialendbereichs und Futtermaterialendbereich. Die Krümmungen der beiden Längsseiten des Verbindungsbandes sind dabei an die unterschiedlichen Krümmungsradien von Obermaterialendbereichsrand und Futtermaterialendbereichrand angepasst.

In diesem Zusammenhang bedeuten konvex und konkav, dass die der Umfangskontur der später anzubringenden Sohle entsprechende Umfangskontur des unteren Schaftendbereichs von der Mitte der späteren Sohlenfläche aus betrachtet nach außen vorgewölbt bzw. nach innen eingezogen ist.

Die Begriffe Bogensektor, Bogenlängen und Einheitssektorwinkel werden an späterer Stelle unter Zuhilfenahme der Fig. 12 noch näher erläutert.

Erfindungsgemäßes Schuhwerk umfasst einen derartigen Schuhschaft und ein Dichtungsmaterial, welches den Futtermaterialendbereich in einer im Bereich des Verbindungsbandes befindlichen, in Schaftendbereichsumfangsrichtung umlaufenden Dichtungsmaterialzone wasserdicht abdichtet.

Bei dem bekannten Schuhwerk der eingangs erwähnten Art ist Faltenbildung des Schaftes im Bereich des Netzbandes hervorgerufen worden, weil nicht berücksichtigt worden ist, dass an Stellen, an welchen der untere Schaftendbereichsumfang ein Krümmung aufweist, was insbesondere im Zehenbereich und im Fersenbereich gilt, der gekrümmte Obermaterialendbereichsrand und der gekrümmte Futtermaterialendbereichsrand unterschiedliche Bogenlängen aufweisen, wobei der Bogenlängenunterschied von der Stärke der lokalen Krümmung abhängt. Wird in bisher üblicher Weise ein Netzband verwendet, welches an die unterschiedlichen Krümmungen des Schaftendbereichsumfangs nicht angepasst oder anpassbar ist, kommt es aufgrund der unterschiedlichen Krümmungen und Krümmungsbogenlängen an den beiden Nertzbandlängsseiten zwangsläufig zu faltenartigen Verwerfungen, die sich auch auf das an das Netzband angenähte Material übertragen können, insbesondere das Futtermaterial, das im allgemeinen weicher ist als das Obermaterial. Solche Faltenbildung des Netzbandes kann dazu führen, dass an den Faltenstellen Dichtungsmaterial, welches das Netzband bis hin zu der Funktionsschicht des Futters durchdringen soll, nicht mehr ausreichend oder ausreichend gleichmäßig zur Funktionsschicht vordringt und die Abdichtung des dem Netzband benachbarten Bereichs der Funktionsschicht nicht mehr in zufriedenstellender Weise gelingt. Faltenbildung im Futtermaterial und/oder im Obermaterial erfordert dickere Klebstoffschichten für das Zwickkleben im Fall eines gezwickten Schaftes und/oder für das Ankleben einer Laufsohle und damit einen höheren Sohlenaufbau, als er ohne Faltenbildung erforderlich wäre. Das-gilt auch für angespritzte Laufsohlen, deren hochstehender Sohlenseitenrand im Fall von Faltenbildung höher gespritzt werden muss.

Das Problem mit der Faltenbildung hat man schon dadurch zu mindern versucht, dass man konisches Netzband eingesetzt hat, bei welchem, wenn man es zu einem Kreis zusammenbiegt, die obere Längsseite dieses Netzbandes einen kleineren Kreisdurchmesser aufweist als die untere Längsseite. Derartiges Netzband, das durch einen Webvorgang hergestellt wird und relativ steif ist, ist einerseits aufwendig in der Herstellung und ist andererseits nur an eine ganz bestimmte Krümmung des Schaftendbereichsumfangs anpassbar. An Stellen anderer Krümmung bleibt das Problem der Faltenbildung aber bestehen und an Stellen, deren Krümmungsrichtung entgegengesetzt zu der ist, für welche das konische Netzband ausgelegt ist, verschärft sich das Problem der Faltenbildung gegenüber neutralem Netzband herkömmlicher Art. Normalerweise ist das konische Netzband auf Krümmungen im Zehen- oder Fersenbereich des Schuhs ausgelegt. Auf der Innenseite des Fußmittelbereichs weist der Schuh aber üblicherweise eine entgegengesetzte Krümmungsrichtung auf. Dort erhöht das konische Netzband die Probleme anstatt sie zu verringern.

Dies wird bei Schuhwerk mit einem erfindungsgemäßen Schaft durch die Verwendung eines an unterschiedliche Krümmung entlang des Schaftendbereichsumfangs angepassten oder anpassbaren Verbindungsbandes vermieden. An unterschiedliche Krümmung angepasstes Verbindungsband wird bereits bei der Herstellung mit einer an ein bestimmtes Schuhmodell angepassten Krümmung versehen, indem es beispielsweise mit dem geeigneten Krümmungsverlauf ausgestanzt oder gespritzt wird. Als anpassbares Verbindungsband eignet sich ein elastisch oder plastisch dehnbares Band, wobei die Anpassung an verschiedene Krümmungen durch Wahl einer Längsdehnungsvorspannung während des Verbindens mit dem Futtermaterialendbereich und/oder dem Obermaterialendbereich erreichbar ist.

Besonders bevorzugt wird elastisch dehnbares Verbindungsband, weil es besonders einfach und ohne Auslegung für ein spezielles Schuhmodell an die unterschiedlichen Krümmungsgegebenheiten anpassbar ist.

Um die gewünschte Wirkung zu erhalten, nämlich die Vermeidung von Faltenbildung, muss die mit dem Futtermaterialendbereich verbundene Längsseite des elastischen Verbindungsbandes elastisch dehnbar und unter Längsdehnungsvorspannung mit dem Futtermaterialendbereich verbunden sein. Die mit dem Schaftobermaterialendbereich verbundene Längsseite des elastischen Verbindungsbandes muss nicht, kann aber elastisch dehnbar sein und muss nicht, kann aber unter Längsdehnungsvorspannung mit dem Schaftobermaterialendbereich verbunden sein. Wenn beide Längsseiten des elastischen Verbindungsbandes unter Längsdehnungsvorspannung verbunden werden, ist es empfehlenswertaber nicht unbedingt notwendig, die mit dem Futtermaterialendbereich verbunde Längsseite unter gleicher Längsdehnungsvorspannung wie die mit dem Schaftobermaterialendbereich verbundene Längsseite zu verbinden.

Dadurch, dass dieses elastische Verbindungsband an seiner mit dem Schaftfuttermaterial verbundenen Längsseite unter Längsdehnungsvorspannung mit dem Schaftfuttermaterial verbunden wird und sich in seine nicht gedehnte Lage zurückzuziehen versucht, ist die mit dem Schaftfuttermaterial zu verbindende Längsseite des elastischen Verbindungsbandes gegenüber der anderen Längsseite verkürzt, wodurch Faltenbildung verhindert wird.

Vorteilhaft ist es, das elastische Verbindungsband auch beim Annähen an das Schaftobermaterial einer Längsdehnungsvorspannung auszusetzen. Dadurch wird in besonders starkem Maß erreicht, dass sich das elastische Verbindungsband auf der mit dem Futtermaterial verbundenen Längsseite beim Krümmen zusammenzieht und dadurch Faltenbildung ganz besonders gut verhindert wird. Nach dem Annnähen des Verbindungsbandes unter Längsdehnungsvorspannung an das Schaftobermaterial ist es auch leichter, das Futtermaterial am Verbindungsband unter Längsdehnungsvorspannung festzunähen, da sich das Schaftobermaterial mit dem daran unter Längsdehnungsvorspannung angenähten elastischen Verbindungsband zusammenzieht und damit das Annähen des Futtermaterials an das Verbindungsband ohne erneute Ausübung einer Längsdehnungsvorspannung mit Schwierigkeiten verbunden sein kann, insbesondere, wenn sich das Futtermaterial und das Obermaterial in Schaftendbereichsumfangsrichtung nicht in gleichem Maß dehnen können.

Das elastische Verbindungsband ermöglicht es sehr einfach, beim Aufspannen des Schaftes auf einen Leisten das Verbindungsband unter die sohlenseitige Leistenkante zu ziehen. Das elastische Verbindungsband klappt aufgrund der Längsdehnungsvorspannung in eine Lage parallel zur später aufzubringenden Laufsohle, was nachfolgende Bearbeitungsschritte erleichtern kann. Das Verbindungsband bleibt faltenfrei, was insbesondere bei Schuhen mit engem Krümmungsradius der Sohlenumfangskontur, ganz besonders bei spitzen Schuhen und kleinen Schuhen, beispielsweise Kinderschuhen und kleineren Damengrößen, wichtig ist. Dadurch, dass keine Falten mehr vorhanden sind, kann bei Ausbildung des Verbindungsbandes als Netzband das nachfolgend aufgebrachte Dichtungs--material das Netzband an allen Stellen gut durchdringen, sodass sich eine besonders hochwertige und dauerhafte Wasserdichtigkeit des fertigen Schuhwerks ergibt. Da keine Falten mehr auftreten, können dünnere Sohlen eingesetzt werden. Dies wirkt sich besonders positiv aus bei Schuhen, bei welchen der untere Schaftendbereich einschließlich des Verbindungsbandes um die untere Leistenkante herumgeschlagen wird und in dieser Lage bleibt und die Laufsohle keinen zum Schaft hochstehenden Rand zu haben braucht, um ein Verbindungsband abzudecken, das sich mit seiner Querdimension in etwa senkrecht zur Laufsohle erstreckt. Denn da das Verbindungsband problemlos und faltenfrei unter der unteren Leistenkante verschwindet, ist es nicht mehr notwendig, den Sohlenrand besonders hoch am Schaft auszubilden. Dadurch wird bei Verwendung einer wasserdampfdurchlässigen und damit atmungsaktiven Funktionsschicht und angespritzter oder angeklebter Laufsohle auch nicht unnötig viel diese Funktionsschicht aufweisendes Futtermaterial durch nicht atmungaktiven Laufsohlenkunststoff abgedeckt und hinsichtlich der Atmungsaktivität blockiert. Das erfindungsgemäß verwendete Verbindungsband trägt somit zur Erhöhung der Gesamtatmungsaktivität des Schuhwerks bei.

Bei dem erfindungsgemäßen Verfahren zur Herstellung eines Schuhschaftes, der mit einem Schaftobermaterial und einem auf der Innenseite des Schaftobermaterials angeordneten, eine wasserdichte Funktionsschicht aufweisenden Futtermaterial aufgebaut ist, wird ein in Schaftform geschnittenes Schaftobermaterialstück bereit gestellt, wird ein in Schaftform geschnittenes Futtermaterialstück derartigen Zuschnitts bereit gestellt, dass ein unterer Endbereich des Futtermaterialstücks nach der lagegerechten Anordnung des Futtermaterialstücks auf der Innenseite des Schaftobermaterialstücks einen nicht von Schaftobermaterial bedeckten Futterrand aufweist, wird der untere Rand des Schaftobermaterialstücks über seinen gesamten Umfang mit einer ersten Längsseite eines Verbindungsbandes verbunden, wird ein unteres Ende des Futterrandes über seinen gesamten Umfang mit einer zweiten Längsseite des Verbindungsbandes verbunden, wobei das Verbindungsband an Krümmungsstellen des unteren Schaftendbereichsumfangs mit einem dem örtlichen Krümmungsradius entsprechenden bogenförmigen Verlauf mit unterschiedlich starker Krümmung der beiden Verbindungsbandlängsseiten versehen wird, derart, dass für einen in der jeweiligen Krümmung liegenden Bogensektor mit vorgegebenem Einheitssektorwinkel sich die zu diesem Bogensektor gehörenden Bogenlängen der beiden Verbindungsbandlängsseiten um so stärker voneinander unterscheiden, je stärker die Krümmung in dem jeweils betrachteten Bogensektor ist, wobei an Stellen mit konvexer Krümmung des unteren Schaftendbereichsumfangs die Bogenlänge der ersten Verbindungsbandlängsseite länger gemacht wird als die Bogenlänge der zweiten Verbindungsbandlängsseite, und zwar entsprechend den unterschiedlichen Krümmungen und Bogenlängen von Obermaterialendbereich und Futtermaterialendbereich.

Bei einer Ausführungsform der-Erfindung wird der nicht von Schaftobermaterial bedeckte Futterrand durch einen Überstand des Futtermaterialendbereichs gegenüber dem Obermaterialendbereich gebildet.

Bei einer Ausführungsform der Erfindung ist das Verbindungsband nicht-porös.

Bei einer ersten Variante dieser Ausführungsform dient das nicht-poröse Verbindungsband oder ein Teil davon als Dichtungsmaterial, das durch Aktivierung, beispielsweise mittels Wärmeenergie, Hochfrequenzenergie, Infrarotenergie oder UV-Energie, aktiviert und dadurch vorübergehend in einen flüssigen und klebenden Zustand gebracht wird, in welchem es seine Dichtwirkung entwickelt. Zum Beispiel weist das Verbindungsband ein elastisches Textilband als Träger auf, das mit einer Dichtungsmasse beschichtet ist.

Bei einer zweiten Variante dieser Ausführungsform, bei welchem an das Schuhwerk eine Zwischensohle oder Laufsohle angespritzt wird, wird für das Verbindungsband ein Material verwendet, das von dem beim Anspritzen der Sohle heißflüssigen Sohlenmaterial schmelzbar ist. Da der sohlenseitige Teil des Schuhwerks in diesem Fall von der angespritzten-Sohle in Form gehalten wird, ist die Stabilität des Schuhwerks auch dann noch gewährleistet, wenn das Verbindungsband beim Anspritzen der Sohle gänzlich wegschmilzt.

Für das nicht-poröse Verbindungsband eignet sich beispielsweise ein Polyurethanstreifen.

Bei einer anderen Ausführungsform der Erfindung ist das Verbindungsband porös oder durchlässig und weist vorzugsweise die Form eines Netzbandes auf, mit derartiger Porosität oder Durchlässigkeit, dass es von flüssigem Dichtungsmaterial durchdringbar ist. Bei dem flüssigen Dichtungsmaterial handelt es sich entweder um beim Anspritzen einer Sohle flüssiges Sohlenmaterial oder, insbesondere wenn das Schuhwerk mit einer angeklebten Laufsohle versehen wird, um einen im ausgehärteten Zustand zu Wasserdichtigkeit führenden Dichtungsklebstoff, vorzugsweise in Form von in ausreagiertem Zustand zu Wasserdichtigkeit führendem Reaktivschmelzklebstoff. Dabei wird der Dichtungsklebstoff im wesentlichen nur auf das poröse Verbindungsband aufgebracht und dichtet die Funktionsschicht in demjenigen Bereich des Schaftfuttermaterials ab, welchem das poröse Verbindungsband gegenüberliegt.

Wichtig ist, dass das Verbindungsband mindestens auf der mit dem Futtermaterial zu verbindenden Längsseite elastisch ist, während die andere Längsseite des Verbindungsbandes mindestens dehnbar oder ebenfalls elastisch sein kann.

Bei einer Ausführungsform der Erfindung weist das poröse oder durchlässige elastische Netzband die Form einer Leiter auf, wobei zwei die beiden Längsseiten des Netzbandes bildende Längsstege durch in Netzbandlängsrichtung gleichmäßig voneinander beabstandete Querstege verbunden sind. Dabei ist mindestens der mit dem Futtermaterial zu verbindende Längssteg elastisch, während die Querstege vorzugsweise starr oder nicht elastisch sind. Die Längsstege bestehen bei einer Ausführungsform des Netzbandes aus Kautschuk, Gummi, Latex oder einem Elastomer, beispielsweise Elastan, während die Querstege vorzugsweise aus Polyamid, Polyester oder einem ähnlichen nichtelastischen Material bestehen.

Hinsichtlich eines derartig geformten elastischen Netzbandes gibt es mehrere Varianten, die für den erfindungsgemäßen Zweck geeignet sind, beispielsweise:
- beide Längsstege sind um 100 % plastisch derart verformbar, dass es an den Krümmungsstellen des Schaftendbereichsumfangs nicht zu Faltenbildung kommt;
- beide Längsstege sind um 100 % elastisch derart verformbar, dass es an den Krümmungsstellen des Schaftendbereichsumfangs nicht zu Faltenbildung kommt;
- beide Längsstege sind je teilweise elastisch als auch plastisch derart verformbar, dass es an den Krümmungsstellen des Schaftendbereichsumfangs nicht zu Faltenbildung kommt;
- einer der beiden Längsstege ist teilweise elastisch als auch plastisch verformbar und der andere Längssteg ist um 100 % plastisch verformbar, derart, dass es an den Krümmungsstellen des Schaftendbereichsumfangs nicht zu Faltenbildung kommt;
- einer der beiden Längsstege ist teilweise elastisch als auch plastisch verformbar und der andere Längssteg ist um 100 % elastisch verformbar, derart, dass es an den Krümmungsstellen des Schaftendbereichsumfangs nicht zu Faltenbildung kommt.

Bei einer ein elastisches Netzband verwendenden Ausführungsform der Erfindung wird das Netzband durch einen Webvorgang hergestellt, wobei die Längsstege durch Längs- oder Kettfäden gebildet werden, die mit Quer- oder Schussfäden verwebt werden. Längsfäden werden nur im Bereich der Längsstege bereitgestellt. In dem zwischen den Längsstegen von Längsfäden frei bleibenden mittleren Bereich bilden die Querfäden die Querstege. Dabei werden die Querstege mit solchem Abstand voneinander angeordnet, das das Netzband eine ausreichende Durchlässigkeit für Dichtungsmaterial erhält. Zum Erhalt der Elastizität werden Längsfäden bildende elastische Fäden, mindestens soweit sie zum mit dem Futtermaterial zu verbindenden Längssteg gehören, während des Webvorgangs in Dehnungsspannung gehalten. Das elastische Netzband kann man je nach spezieller Anforderung unterschiedlich gestalten. Es bestehen die Möglichkeiten, dass nur einer der Längsstege elastisch ist, dass beide Längsstege elastisch sind, dass beide Längsstege eine unterschiedliche Elastizität haben und auch, dass das Netzband entlang seiner Länge Zonen unterschiedlicher Elastizität aufweist, um beispielsweise im Zehen- und Fersenbereich des Schuhwerks eine höhere und in den Seitenfußbereichen des Schuhwerks eine geringere Elastizität bereitzustellen.

Bevorzugt wird die Möglichkeit, für den gesamten Schuhschaftumfang ein Netzband mit über seine Länge gleichbleibender Elastizität zu verwenden, wobei das Netzband an den Stellen kleineren Krümmungsradius, also im Zehen- und Fersenbereich, mit dem Schaftobermaterial unter höherer Längsdehnungsvorspannung vernäht werden kann als im Bereich der Fußlängsseiten.

Die erfindungsgemäße Lösung eignet sich sowohl für Schuhwerk mit Brandsohle als auch für Schuhwerk ohne Brandsohle.

Bei Schuhwerk ohne Brandsohle wird der sohlenseitige Schaftendbereich mittels einer Zurrschnur zusammengezurrt (auch unter dem Begriff String Lasting bekannt). Im Fall von Schuhwerk mit einer Brandsohle wird das Schaftmaterial mit der Brandsohle entweder durch Strobeln, d.h. mittels einer das Schaftmaterial und die Brandsohle verbindenden Strobelnaht, oder durch Zwickkleben eines zum unteren Schaftendbereich gehörenden Zwickeinschlags auf die Unterseite der Brandsohle mittels Zwickklebstoffs verbunden. Auch die Anwendung beider Befestigungsmethoden in Kombination bei ein und demselben Schuhwerk ist möglich, wobei beispielsweise der Futtermaterialendbereich mittels Strobelnaht mit der Brandsohle verbunden und der Obermaterialendbereich mit der Brandsohle mittels Zwickklebens verbunden wird. Es gibt auch Schuhwerk mit einer Teilbrandsohle, die sich nur über eine Teillänge des Schuhwerks erstreckt, wobei das untere Schaftende über den keine Brandsohle aufweisenden Teil der Schuhlänge mittels Zurrschnurzusammengezurrt und über den-die Teilbrandsohle aufweisenden Teil der Schuhlänge zwickgeklebt wird. Entsprechend wird das elastische Verbindungsband mit dem Brandsohlenumfangsrand mittels der Strobelnaht verbunden oder wird die nicht mit dem Schaftobermaterial verbundene Längsseite des Verbindungsbandes an dem Zwickeinschlagrand befestigt.

Die Verwendung eines elastischen Verbindungsbandes führt dazu, dass nach dem Verbinden der einen Längsseite des Verbindungsbandes mit dem Schaftobermaterial unter Längsdehnungsvorspannung der nicht mit dem Schaftobermaterial verbundene Teil des Verbindungsbandes nach innen klappt, derart, dass dieser -Teil des Verbindungsbandes von der Innenseite des sohlenseitigen Schaftendbereichs in etwa senkrecht weg steht und sich in etwa parallel zur noch anzubringenden Laufsohle erstreckt. Dies ist vorteilhaft insofern, als der seitliche Rand der angespritzten oder angeklebten Laufsohle nicht so hoch zu sein braucht als wenn das Verbindungsband senkrecht zur Laufsohle ausgerichtet bliebe und/oder Falten aufwiese.

Insbesondere für Sohlenaufbauten, die weder eine wasserdichte Brandsohle noch eine wasserdichte Zwischensohle noch eine wasserdichte Laufsohle aufweisen, eignet sich eine Ausführungsform der Erfindung, bei welcher eine flächige wasserdichte Dichtungsschicht vorgesehen ist, die parallel zu der noch aufzubringenden Laufsohle sich erstreckend derart auf die Unterseite eines umgeschlagenen Schaftendbereichs aufgebracht ist, daß eine untere Schaftöffnung bis zu der Dichtungsmaterialzone hin abgedichtet ist. Vorzugsweise handelt es sich bei der Dichtungsschicht um eine Dichtungsplatte (in Fachkreisen auch als Gasket bekannt), die auf die Brandsohlenunterseite oder, wenn es sich um einen brandsohlenfreien Aufbau mit Zurrschnur handelt, auf die Unterseite des umgeschlagenen, zusammengezurrten Schaftendbereichs geklebt wird. Bei einer Ausführungsform ist die Dichtungsplatte wasserdicht und vorzugsweise auch wasserdampfdurchlässig. Sie kann mit einem Laminat aufgebaut sein, das eine Trägermateriaischicht und eine wasserdichte, vorzugsweise auch wasserdampfdurchlässige Funktionsschicht aufweist.

Bei der Dichtungsschicht kann es sich je nach dem speziellem Sohlenaufbau auch um eine Zwischensohle oder eine Laufsohle handeln oder auch eine um eine Dichtmaterialschicht, beispielsweise in Form eines auf die Innenseite der Laufsohle oder eines nur auf das als Netzband ausgebildete Verbindungsband aufgebrachten Dichtklebstoffs, insbesondere in Form von Reaktivschmelzklebstoff.

Bei einer Ausführungsform der Erfindung weist die Funktionsschicht des Schaftfuttermaterials und/oder der Dichtungsplatte eine Schicht aus durch Expandieren mikroporöses Polytetrafluorehtylen (ePTFE) auf.

Zum Abdichten der Funktionsschicht mittels des Verbindungsbandes (wenn dieses selbst Dichtungsmaterial aufweist) oder durch das Verbindungsband hindurch (wenn dieses als poröses oder durchlässiges Netzband ausgebildet ist) eignet sich jedes zu Wasserdichtigkeit führende Material. Im Fall der Verwendung von Dichtungseigenschaften aufweisendem Klebstoff als Dichtungsmaterial wird Reaktivschmelzklebstoff bevorzugt, der eine besonders gute Abdichtung im Bereich des Sohlenaufbaus des Schuhwerks bewirkt. Reaktivschmelzklebstoff hat einerseits im flüssigen Zustand vor dem Ausreagieren eine besonders hohe Kriechfähigkeit und führt andererseits im ausregierten Zustand zu einer besonders hohen und dauerhaften Wasserdichtigkeit. Der Reaktivschmelzklebstoff läßt sich mit sehr einfachen Mittel aufbringen, zum Beispiel aufstreichen, aufsprühen oder in Form eines Klebstoffstreifens oder einer Klebstoffraupe aufbringen, wobei sich der Reaktivschmelzklebstoff durch Erwärmung klebefähig machen und dadurch im Bereich des Verbindungsbandes fixieren läßt, bevor das Ausreagieren und die damit einhergehende dauerhafte Verklebung mit der Funktionsschicht beginnt.

Die Verklebung des Reaktivschmelzklebstoffs oder sonstigen Dichtungsmaterials mit der Funktionsschicht wird besonders innig, wenn man den Reaktivschmelzklebstoff oder das sonstige Dichtungsmaterial- nach dem Auftragen auf das Verbindungsband mechanisch gegen die Funktionsschicht drückt. Hierzu eignet sich vorzugsweise eine Anpreßvorrichtung, z.B. in Form eines Anpreßkissens, mit einer durch den Reaktivschmelzklebstoff oder das sonstige Dichtungsmaterial nicht benetzbaren und daher mit dem Reaktivschmelzklebstoff oder das sonstige Dichtungsmaterial nicht verklebenden, glatten Materialoberfläche, beispielsweise aus nichtporösem Polyterafluorethylen (auch unter der Handelsbezeichnung Teflon bekannt), Silikon oder PE (Polyethylen). Vorzugsweise verwendet man hierzu ein Anpreßkissen, beispielsweise in Form eines Gummikissens oder Luftkissens, dessen Anpreßoberfläche mit einer Folie aus einem der genannten Materialien, beispielsweise nicht-porösem Polytetrafluorethylen, überzogen ist, oder man ordnet vor dem Anpreßvorgang zwischen dem mit dem Reaktivschmelzklebstoff oder dem sonstigen Dichtungsmaterial versehenen Sohlenaufbau und dem Anpreßkissen eine derartige Folie an.

Vorzugsweise wird ein mittels Feuchtigkeit aushärtbarer Reaktivschmelzklebstoff verwendet, der auf den zu klebenden Bereich aufgetragen und zum Ausreagieren Feuchtigkeit ausgesetzt wird. Bei einer Ausführungsform der Erfindung wird ein thermisch aktivierbarer und mittels Feuchtigkeit aushärtbarer Reaktivschmelzklebstoff verwendet, der thermisch aktiviert, auf den zu klebenden Bereich aufgetragen und zum Ausreagieren Feuchtigkeit ausgesetzt wird.

Als Reaktivschmelzklebstoffe werden Klebstoffe bezeichnet, die vor ihrer Aktivierung aus relativ kurzen Molekülketten mit einem mittleren Molekulargewicht im Bereich von etwa 3000 bis etwa 5000 g/mol bestehen, nichtklebend sind und, gegebenenfalls nach thermischem Aktivieren, in einen Reaktionszustand gebracht werden, in welchem die relativ kurzen Molekülketten zu langen Molekülketten vernetzen und dabei aushärten, und zwar vorwiegend in feuchter Atmosphäre. In dem Reaktions- oder Aushärtezeitraum sind sie klebefähig. Nach dem vernetzenden Aushärten können sie nicht wieder aktiviert werden. Beim Ausreagieren kann es zu dreidimensionaler-Vernetzung von Molokülketten kommen. Die dreidimensionale Vernetzung führt zu einem besonders starken Schutz vor dem Eindringen von Wasser in den Klebstoff.

Für den erfindungsgemäßen Zweck geeignet sind z.B. Polyurethan-Reaktivschmelzklebstoffe, Harze, aromatische Kohlenwasserstoff-Harze, aliphatische Kohlenwasserstoff-Harze und Kondensationsharze, z.B. in Form von Epoxyharz.

Besonders bevorzugt werden Polyurethan-Reaktivschmelzklebstoffe, im folgenden PU-Reaktivschmelzklebstoffe genannt.

Bei einer praktischen Ausführungsform erfindungsgemäßen Schuhwerks wird ein PU-Reaktivschmelzklebstoff verwendet, der unter der Bezeichnung IPATHERM S 14/242 von der Firma H.P.Fuller in Wells, Österreich, erhältlich ist. Bei einer anderen Ausführungsform der Erfindung wird ein PU-Reaktivschmelzklebstoff verwendet, der unter der Bezeichnung Macroplast QR 6202 von der Firma Henkel AG, Düsseldorf, Deutschland, erhältlich ist.

Besonders bevorzugt wird eine Funktionsschicht, die nicht nur wasserundurchlässig sondern auch wasserdampfdurchlässig ist. Dies ermöglicht die Herstellung von wasserdichten Schuhen, die trotz Wasserdichtigkeit atmungsaktiv bleiben.

Als "wasserdicht" wird eine Funktionsschicht angesehen, gegebenenfalls einschließlich an der Funktionsschicht vorgesehener Nähte, wenn sie einen Wassereingangsdruck von mindestens 1x10⁴ Pa gewährleistet. Vorzugsweise gewährleistet das Funktionsschichtmaterial einen Wassereingangsdruck von über 1x10⁵ Pa. Dabei ist der Wassereingangsdruck nach einem Testverfahren zu messen, bei dem destilliertes Wasser bei 20±2°C auf eine Probe von 100 cm² der Funktionsschicht mit ansteigendem Druck aufgebracht wird. Der Druckanstieg des Wassers beträgt 60±3 cm Ws je Minute. Der Wassereingangsdruck entspricht dann dem Druck, bei dem erstmals Wasser auf der anderen Seite der Probe erscheint. Details der Vorge hensweise sind in der ISO-Norm 0811 aus dem Jahre 1981 vorgegeben.

Als "wasserdampfdurchlässig" wird eine Funktionsschicht dann angesehen, wenn sie eine Wasserdampfdurchlässigkeitszahl Ret von unter 150 m2xPaxW-1 aufweist. Die Wasserdampfdurchlässigkeit wird nach dem Hohenstein-Hautmodell getestet. Diese Testmethode wird in der DIN EN 31092 (02/94) bzw. ISO 11092 (1993) beschrieben.

Ob ein Schuh wasserdicht ist, kann z.B. mit einer Zentrifugenanordnung der in der US-A-5 329 807 beschriebenen Art getestet werden.

Geeignete Materialien für die wasserdichte, wasserdampfdurchlässige Funktionsschicht sind insbesondere Polyurethan, Polypropylen und Polyester, einschließlich Polyetherester und deren Laminate, wie sie in den Druckschriften US-A-4,725,418 und US-A-4,493,870 beschrieben sind. Besonders bevorzugt wird jedoch gerecktes mikroporöses Polytetrafluorethylen (ePTFE), wie es beispielsweise in den Druckschriften US-A-3,953,566 sowie US-A-4,187,390 beschrieben ist, und gerecktes Polytetrafluorethylen, welches mit hydrophilen Imprägniermitteln und/oder hydrophilen Schichten versehen ist; siehe beispielsweise die Druckschrift US-A-4,194,041. Unter einer mikroporösen Funktionsschicht wird eine Funktionsschicht verstanden, deren durchschnittliche Porengröße zwischen etwa 0,2 µm und etwa 0,3 µm liegt.

Die Porengröße kann mit dem Coulter Porometer (Markenname) gemessen werden, das von der Coulter Electronics, Inc., Hialeath, Florida, USA, hergestellt wird.

Verwendet man als Funktionsschicht ePTFE, kann der Reaktivschmelzklebstoff während des Klebvorgangs in die Poren dieser Funktionsschicht eindringen, was zu einer mechanischen Verankerung des Reaktivschmelzklebstoffs in dieser Funktionsschicht führt. Die aus ePTFE bestehende Funktionsschicht kann auf der Seite, mit welcher sie bei dem Klebevorgang mit dem Reaktivschmelzklebstoff in Berührung kommt, mit einer dünnen Polyurethan-Schicht versehen sein. Bei Verwendung von PU-Reaktivschmelzklebstoff in Verbindung mit einer solchen Funktionsschicht kommt es nicht nur zur mechanischen Verbindung sondern zusätzlich auch zu einer chemischen Verbindung zwischen dem PU-Reaktivschmelzklebstoff und der PU-Schicht auf der Funktionsschicht. Dies führt-zu einer besonders innigen Verklebung zwischen der Funktionsschicht und dem Reaktivschmelzklebstoff, so daß eine besonders dauerhafte Wasserdichtigkeit gewährleistet ist.

Als Schaftobermaterial sind beispielsweise Leder oder textile Flächengebilde geeignet. Bei den textilen Flächengebilden kann es sich beispielsweise um Gewebe, Gestricke, Gewirke, Vlies oder Filz handeln. Diese textilen Flächengebilde können aus Naturfasern, beispielsweise aus Baumwolle oder Viskose, aus Kunstfasern, beispielsweise aus Polyestern, Polyamiden, Polypropylenen oder Polyolefinen, oder aus Mischungen von wenigstens zwei solcher Materialien hergestellt sein.

Bei Verwendung einer Funktionsschicht ist normalerweise auf der Innenseite ein Futtermaterial angeordnet. Als Futtermaterial, das mit der Funktionsschicht häufig zu einem Funktionsschichtlaminat verbunden wird, eignen sich die gleichen Materialien, wie sie vorausgehend für das Schaftobermaterial angegeben sind. Das Funktionsschichtlaminat kann auch mehr als zwei Schichten aufweisen, wobei sich auf der von der Futterschicht abliegenden Seite der Funktionsschicht eine textile Abseite befinden kann.

Die Laufsohle erfindungsgemäßen Schuhwerks kann aus wasserdichtem Material wie z.B. Gummi oder Kunststoff, beispielsweise Polyurethan, bestehen oder aus nicht-wasserdichtem, jedoch atmungsaktivem Material wie insbesondere Leder, aus mit Gummi oder Kunststoffintarsien versehenem Leder oder aus mit Lederintarsien versehenem Gummi- oder Kunststoff. Im Fall nicht-wasserdichten Laufsohlenmaterials kann die Laufsohle dadurch wasserdicht gemacht werden,-bei Aufrechterhaltung der Atmungsaktivität, daß sie mindestens an Stellen, an denen der Sohlenaufbau nicht schon durch andere Maßnahmen wasserdicht gemacht worden ist, mit einer wasserdichten, wasserdampfdurchlässigen Funktionsschicht versehen wird.

Die Brandsohle erfindungsgemäßen Schuhwerks kann aus Viskose, Vlies, z.B. Polyestervlies, dem Schmelzfasern zugesetzt sein können, Leder oder verklebten Lederfasern bestehen. Eine Brandsohle ist unter der Bezeichnung Texon Brandsohle der Texon Mockmuhl GmbH in Mockmuhl, Deutschland, erhältlich. Brandsohlen aus solchen Materialien sind wasserdurchlässig. Eine Brandsohle aus solchem oder weiterem Material kann dadurch wasserdicht gemacht werden, daß auf einer ihrer Oberflächen oder in ihrem Inneren eine Schicht aus wasserdichtem Material angeordnet wird. Zu diesem Zweck kann z.B. eine Folie mit Kappenstoff V25 der Firma Rhenoflex in Ludwigshafen, Deutschland, aufgebügelt werden. Soll die Brandsohle nicht nur wasserdicht sondern auch wasserdampfdurchlässig sein, wird sie mit einer wasserdichten, wasserdampfdurchlässigen Funktionsschicht versehen, die vorzugsweise mit ePTFE (expandiertem, mikroporösem Polytetrafluorethylen) aufgebaut ist. Hierfür eignet sich beispielsweise ein Laminat, das eine wasserdichte, wasserdampfdurchlässige Funktionsschicht enthält und unter der Handelsbezeichnung TOP DRY von der W.L. Gore & Associates GmbH, Putzbrunn, Deutschland, erhältlich ist.

Eine weitere Möglichkeit besteht darin, derartiges Laminat (TOP DRY) auf die Brandsohle und mindestens auf den gezwickten Futterüberstand von unten aufzukleben, wodurch der Schaft schon vor dem Aufkleben einer Laufsohle wasserdicht gemacht wird.

Die Erfindung wird nun anhand von Ausführungsformen näher erläutert.

Die Zeichnungen zeigen mehrere Ausführungsformen erfindungsgemäßen Schuhwerks in unterschiedlichen Herstellungsstadien.
Fig. 1 zeigt in Schrägansicht eine Draufsicht auf die Unterseite eines erfindungsgemäßen Schuhschaftes mit einem Netzband ;
Fig. 2 zeigt eine Schrägansicht einer bei Fig. 1 verwendeten Ausführungsform eines elastischen Netzbandes;
Fig. 3 zeigt einen Schuh erfindungsgemäßer Machart mit gestrobelter Brandsohle;
Fig. 4 zeigt eine Teilschnittansicht des Aufbaus gemäß Fig. 3;
Fig. 5 zeigt eine Ausführungsform eines zwickgeklebten Schuhs mit Brandsohle;
Fig. 6 zeigt eine Teilschnittansicht des Aufbaus gemäß Fig. 5;
Fig. 7 zeigt einen brandsohlenfreien Schuh mit Zurrschnur (String Lasting);
Fig. 8 zeigt eine Teilschnittansicht des in Fig. 7 gezeigten Aufbaus;
Fig. 9 zeigt eine Ausführungsform eines in Fig. 7 verwendbaren elastischen Netzbandes mit integriertem Zurrschnurtunnel und Zurrschnur;
Fig. 10 eine Ausführungsform eines erfindungsgemäßen Schuhs mit angespritzter Sohle;
Fig. 11 zeigt eine Teilschnittansicht dieser Ausführungsform;
Fig. 12 zeigt eine Teilschnittansicht eines Aufbaus mit Abdichtung mittels angespritzter Sohle; und
Fig. 13 zeigt eine Skizze zur Erläuterung einiger in der vorliegenden Schrift verwendeter Begriffe.

Im folgenden beziehen sich Begriffe wie oben und unten auf Schuhwerk, das sich in Normalstellung befindet, also mit der Laufsohle nach unten weisend, auch wenn die Zeichnungen Schuhe in umgekehrter Position zeigen.

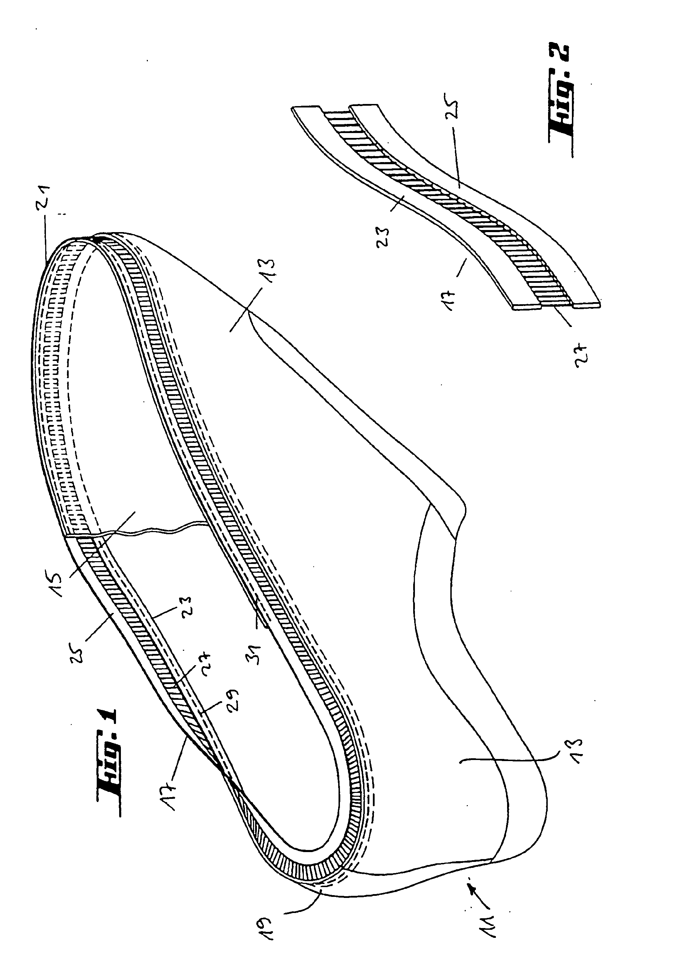

Fig. 1 zeigt einen Schaft 11 mit einem Schaftobermaterial 13, einem Schaftfuttermaterial 15 und einem elastischen Netzband 17, über welches ein Obermaterialendbereich 19 und ein Futtermaterialendbereich 21 miteinander verbunden sind.

Das in Fig. 2 vergrößert dargestellte Netzband 17 umfaßt einen ersten Längssteg 23 und einen zweiten Längssteg 25, die mittels Querstegen 27 miteinander verbunden sind. Wie in Fig. 1 zu sehen ist, ist der erste Längssteg 23 über eine erste Naht 29 mit dem Obermaterialendbereich 19 und über eine zweite Naht 31 mit dem Futtermaterialendbereich 21 verbunden.

Mindestens der zweite Längssteg 25 besteht aus elastischem Material und ist unter Längsdehnungsvorspannung mit dem Futtermaterialendbereich 21 vernäht. Der erste Längssteg 23 kann, muß aber nicht elastisch sein. Die Querstege 27 können elastisch sein, sind aber vorzugsweise nicht elastisch.

Bei einer Ausführungsform des elastischen Netzbandes 17 bestehen die beiden Längsstege 23 und 25 aus Latex-Gummi oder einem anderen (gummiartigen) Material mit elastischem Verhalten (z.B. Lycra etc.) und die Querstege 27 aus Polyamid, Polyester oder einem ähnlichen Material. Die Länge der Querstege 27 und deren Abstand voneinander sind so gewählt, daß die im Schaftfuttermaterial 15 vorhandene wasserdichte, wasserdampfdurchlässige Funktionsschicht durch das Netzband 17 hindurch ausreichend mit Dichtungsmaterial benetzt werden kann.

Eine Ausführungsform eines derzeit bevorzugten elastischen Netzbandes hat eine Breite von etwa 10 mm, von denen die beiden Längsstege 23 und 25 je etwa 3,5 mm und der lichte Abstand, also die Länge der freiliegenden Querstege 27, etwa 3 mm einnehmen. Dabei haben die Querstege 27-einen Abstand von etwa 0,25 mm voneinander. Generell ist bei der Wahl des Abstandes der Querstege voneinander vom speziellen Anwendungsfall auszugehen, wobei insbesondere die Viskosität des Dichtungsmaterials zu berücksichtigen ist, für welches das Netzband durchdringbar sein soll.

Bei einer anderen Ausführungsform für Skischuhe weist das Netzband 17 eine Breite von etwa 15 mm auf.

Bei einer Ausführungsform des Netzbandes mit den obigen Abmessungen handelt es sich um ein gewebtes, elastisches Band mit Kett- oder Längsfäden aus Naturgummi und texturierten Polyamidfäden, wobei eine Materialzusammensetzung von 40 % Naturgummi, 40 % Monofilpolyamid und 20 % texturiertes Polyamid bevorzugt werden.

Ein solches Netzband wird vorzugsweise durch einen Webvorgang hergestellt. Dabei befinden sich Kett- oder Längsfäden nur im Bereich der beiden Längsstege 23 und 25, so dass die Quer- oder Schußfäden in dem Bereich zwischen den beiden Längsstegen 23 und 25 frei liegen und somit die Querstege 27 bilden können. Als Längsfäden für die Längsstege 23 und 25 werden elastische Längsfäden, vorzugsweise aus Gummi, und nicht elastische Längsfäden, vorzugsweise aus Polyamid, verwendet, für die Querstege nur nicht elastische Fäden, vorzugsweise ebenfalls aus Polyamid. Beim Vorgang des Webens des elastischen Netzbandes 17 werden die-elastischen Längsfäden um ein vorbestimmtes Maß gedehnt und die nicht elastischen Längsfäden parallel zu den gedehnten elastischen Längsfäden angeordnet. In diesem Zustand werden die Längsfäden mit den Querfäden verwebt. Nach dem Webvorgang ziehen sich die elastischen Längsfäden zusammen und das Netzband 17 entspannt sich entsprechend.

Bei der Herstellung dieses Netzbandes können für die beiden Längsstege 23 und 25 unterschiedliche Elastizitätswerte erzeugt werden, indem für die beiden Längsstege 23 und 25 entweder unterschiedlich dehnbare Bänder verwendet werden oder die beiden Längsstege 23 und 25 während des Vorgangs des Webens mit den Querstegen 27 unterschiedlich stark gedehnt werden.

Beim Vernähen des Netzbandes 17 mit dem Schaft 11 wird zunächst der erste Längssteg 23 mit dem Obermaterialendbereich 19 vernäht, und zwar unter Längsdehnungsvorspannung des ersten Längssteges 23. Nach dem Festnähen des ersten Längssteges 23 an dem Obermaterialendbereich 19-klappt der restliche Teil des Netzbandes mit dem zweiten Längssteg 25 und den Querstegen 27 nach innen, wie es in Fig. 1 im Fersenbereich des Schaftes gezeigt ist. Dieses Umklappen ist eine Folge des Annähens des ersten Längssteges 23 an dem Obermaterialendbereich 19 unter Längsdehnungsvorspannung. Durch das Umklappen nimmt das Netzband 17 eine Lage ein, in welcher es sich im wesentlichen parallel zu der später aufzubringenden Laufsohle erstreckt. Dieses Umklappen geschieht auch im Zehenbereich des Schaftes 11, was dann in den meisten Fällen zum Umklappen des Netzbandes 17 über seine gesamte Länge führen wird. In Fig. 1 ist das Umklappen des Netzbandes 17 lediglich im Fersenbereich des Schaftes 11 gezeigt, um im Vorderfußbereich die Verbindung des Schaftfuttermaterials 15 mit dem Netzband 17 besser darstellen zu können.

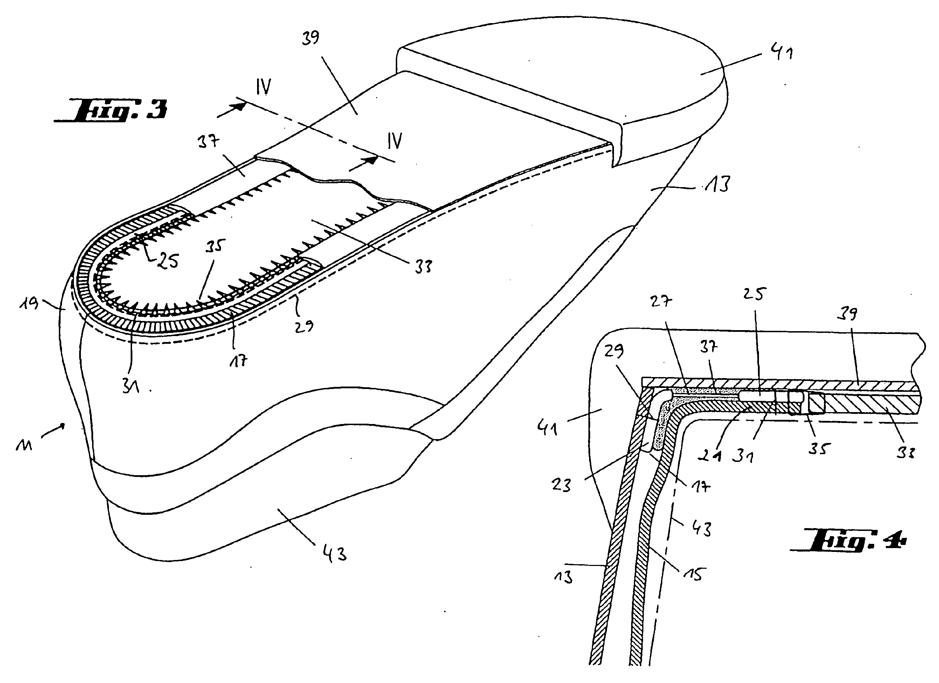

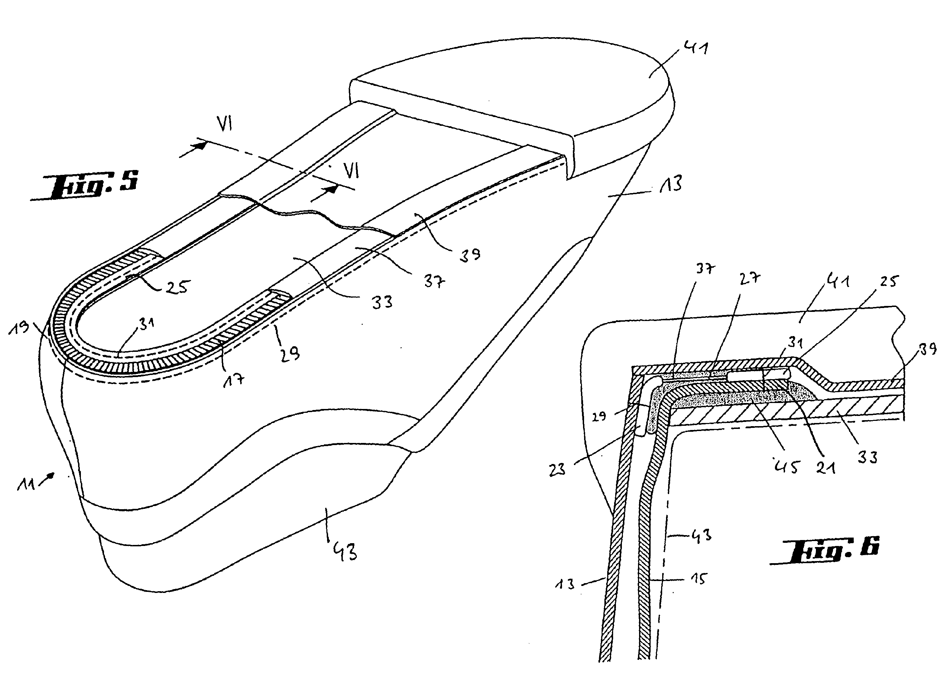

Die folgenden Figuren zeigen verschiedene Ausführungsformen erfindungsgemäßen Schuhwerks in einem späteren Herstellungsstadium als Fig. 1, und zwar je in perspektivischer Draufsicht auf die Unterseite, teilweise in Schnittansicht, und einer Teil-Querschnittsansicht. Die in den Fig. 3 - 11 dargestellten Ausführungsformen unterscheiden sich hinsichtlich des Dichtungsmaterials und/oder der Sohlenkonstruktion voneinander.

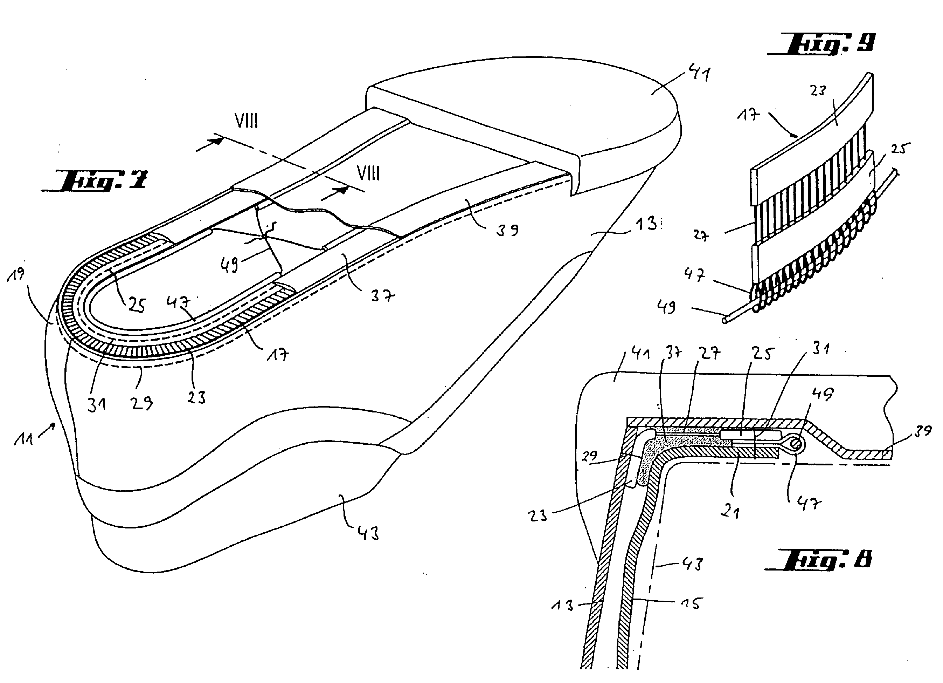

Die Fig. 3 und 4 zeigen eine Ausführungsform auf einen Leisten 43 aufgespannten erfindungsgemäßen Schuhwerks, welches eine gestrobelte Brandsohle und eine angeklebte Laufsohle aufweist.

Ausgehend von dem in Fig . 1 gezeigten Schaft 11 mit Netzband 17 wird bei der in den Fig. 3 und 4 gezeigten Ausführungsform eine Brandsohle 33 mittels einer Strobelnaht 55 mit dem zweiten Längssteg 25 des elastischen Netzbandes 17 verbunden. Dabei erstreckt sich das Netzband 17 in der Ebene der Brandsohle 33.

In einer Breite, die in etwa der Breite des Netzbandes 17 entspricht, ist auf das Netzband 17 ein Dichtungsmaterial in Form von z.B. Dichtungsklebstoff 37 aufgetragen, der eine in Schaftendbereichsumfangsrichtung umlaufende geschlossene Dichtungsmaterialzone bildet, in welcher der Dichtungsklebstoff 37 das Netzband 17 durchdringend bis zur Funktionsschicht das Schaftfuttermaterials 15 vordringt und dieses wasserdicht abdichtet.

Für den Fall, daß weder die Brandsohle 33 noch eine noch aufzubringende Zwischensohle oder Laufsohle 41 wasserdicht ist, wird die zur Laufsohle 41 weisende Unterseite der Brandsohle mit einer Dichtungsplatte 39 (einem Gasket) abgedeckt, welche eine wasserdichte Funktionsschicht aufweist, die vorzugsweise ebenfalls wasserdampfdurchlässig ist, um auch im Sohlenbereich des Schuhs trotz Wasserdichtigkeit Atmungsaktivität aufrecht zu erhalten. Die Dichtungsplatte 39 braucht sich nicht - wie in Fig. 3 dargestellt - bis zum Außenrand des Netzbandes 17 zu erstrecken. Es reicht eine Erstreckung, mittels welcher die Brandsohle 33 und die Strobelnaht 35 abgedeckt werden, wobei die Dichtungsplatte 39 sich mit dem Dichtungsklebstoff 37 überlappt, um eine sichere Abdichtung der Sohlenkonstruktion zu erreichen.

Als Dichtungsklebstoff 37 wird aufgrund seiner hohen Kriechfähigkeit im flüssigen, nicht-reagierten Zustand und seiner hohen und dauerhaften Wasserdichtigkeit im ausreagierten Zustand vorzugsweise Reaktivschmelzklebstoff verwendet, insbesondere Polyurethan-Reaktivschmelzklebstoff. Aufgrund seiner hohen Kriechfähigkeit im flüssigen, nicht reagierten Zustand hat der Reaktivschmelzklebstoff in besonders hohem Maß die Fähigkeit, das elastische Netzband 17 zu durchdringen, bis zur Funktionsschicht des Schaftfuttermaterials 15 vorzudringen und diese zu benetzen, wobei die Querstege des Netzbandes 17 vom Reaktivschmelzklebstoff unterwandert werden und damit eine vollflächige Benetzung der Funktionsschicht mit dem Reaktivschmelzklebstoff ermöglicht wird, und damit das Vordringen von Wasser, welches über das Schaftobermaterial 13 bis zum Netzband 17 vorgedrungen ist, daran zu hindern, bis zur Innenseite des Schaftfuttermaterials 15 zu gelangen und damit bis zur Innenseite des Schuhs.

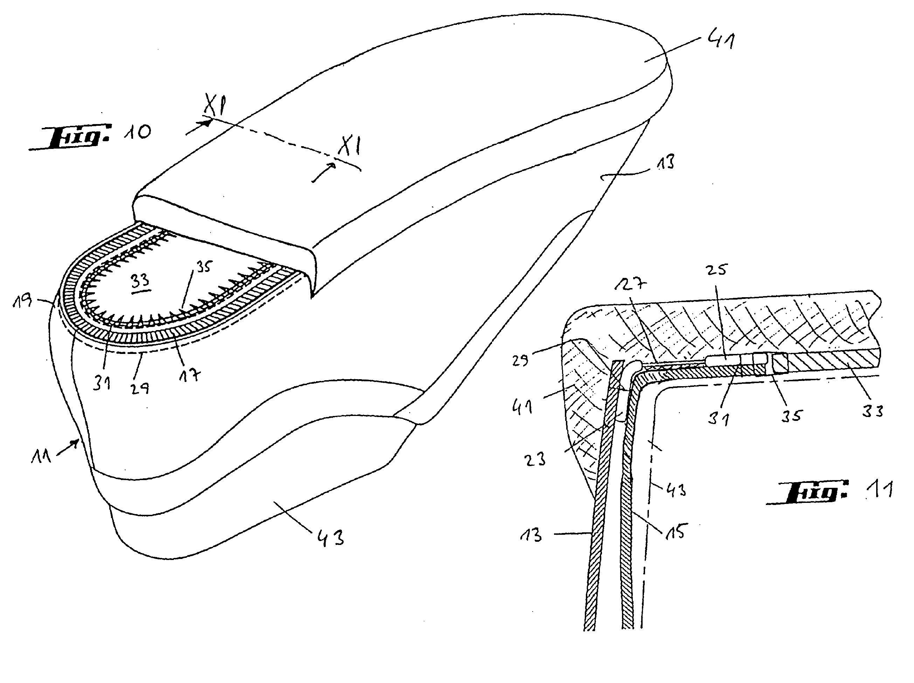

Bei der in den Fig. 5 und 6 gezeigten Ausführungsform ist der umgeschlagene Teil des sohlenseitigen Schaftendbereichs durch Zwickklebung an der Brandsohle 33 befestigt. Das Zwickkleben geschieht mittels eines Zwickklebstoffs 45, der in der Querschnittsansicht in Fig. 6 zu sehen ist.

Auch bei dieser Ausführungsform befindet sich auf der (zur Laufsohle 41 weisenden) unteren Seite des Netzbandes 17 ein Dichtungsklebstoff 37, vorzugsweise in Form von Reaktivschmelzklebstoff, wie er bereits im Zusammenhang mit der Ausführungsform der Fig. 3 und 4 erläutert worden ist.

Auch bei dieser Ausführungsform kann eine Dichtungsplatte 39 oder eine flächig aufgetragene durchgehende Schicht aus Reaktivschmelzklebstoff für den Fall vorgesehen werden, daß die Laufsohle 41 nicht wasserdicht ist.

Die Fig. 7 - 9 zeigen eine Ausführungsform eines brandsohlenlosen Schuhs, bei welchem der sich parallel zur Laufsohle 41 erstreckende sohlenseitige Schaftendbereich mittels einer Zurrschnur 49 gespannt oder zusammengezurrt wird. Die Zurrschnur 49 wird in einem Schnurzugtunnel 47 geführt, der beispielsweise in der in Fig. 9 gezeigten Weise an dem zweiten Längssteg 25 des elastischen Netzbandes 17 angebracht ist. Wie Fig. 7 zeigt, ist der Schnurzugtunnel 47 an zwei Stellen des Schuhumfangs, die sich zwischen dem Fersenbereich und dem Zehenbereich befinden, offen, um hier die Zurrschnur 49 greifen, spannen und verknoten zu können.

Auch bei dieser Ausführungsform ist auf das Netzband 17 Dichtungsklebstoff 37 aufgebracht, vorzugsweise wieder in Form von Reaktivschmelzklebstoff, wobei hinsichtlich Einzelheiten auf die Erläuterungen im Zusammenhang mit Fig. 3 verwiesen werden kann.

Während Fig. 9 eine Ausführungsform zeigt, bei welcher der Schnurzugtunnel 47 unmittelbar an dem Netzband 17 angebracht ist, zeigt Fig. 8 eine Ausführungsform, bei welcher ein zunächst separater Schnurzugtunnel 47 mit darin befindlicher Zurrschnur 49 mittels der zweiten Naht 31 zwischen dem zweiten Längssteg 25 des Netzbandes 17 und dem Futtermaterialendbereich 21 festgenäht wird.

Der Schuhaufbau entsprechend den Fig. 7 bis 9 kann dadurch modifiziert werden, dass eine Sohle aus wasserdichtem Material, bei der es sich um eine Zwischensohle oder eine Laufsohle handeln kann, an die Unterseite des Schaftendbereichs angespritzt wird, mittels welcher eine Abdichtung des Sohlenaufbaus bewirkt wird. In diesem Fall ist weder ein Gasket noch eine Dichtmaterialschicht oder Reaktivschmelzklebstoffschicht erforderlich.

Die Fig. 10 und 11 zeigen eine Ausführungsform, bei welcher das Dichtungsmaterial durch Sohlenmaterial einer Sohle gebildet ist, bei der es sich beispielsweise um eine Zwischensohle oder die Laufsohle 41 handeln kann. Bei dieser Ausführungsform verlaufen alle Herstellungsschritte bis zum Befestigen der Brandsohle an dem Netzband 17 mittels einer Strobelnaht 35 wie in den Fig. 3 und 4 gezeigt und dort erläutert oder mittels einer Zugschnur wie im Zusammenhang mit den Fig. 7 bis 9 erläutert. Abweichend von der Ausführungsform in den Fig. 3 und 4 wird bei der Ausführungsform gemäß den Fig. 10 und 11 kein Dichtklebstoff 37 und kein Gasket aufgebracht. Bei der Ausführungsform gemäß Fig. 10 und 11 weist der Schuh eine angespritzte Sohle 41 auf. Das beim Anspritzen der Sohle 41 flüssige Sohlenmaterial durchdringt das Netzband 17, benetzt die Funktionsschicht des Schaftfuttermaterials 15 im Bereich des Netzbandes 17 und bewirkt eine Abdichtung der Funktionsschicht in diesem Bereich. Die Dichtungsfunktion, welche bei den Ausführungsformen der Fig. 3 und 7 von separat aufgebrachtem Dichtungsklebstoff 37 übernommen wird, übt bei der Ausführungsform nach Fig. 10 der Sohlenklebstoff aus.

Eine Dichtungsplatte 39, wie sie bei den vorausgehenden Ausführungsformen gezeigt ist, wird bei der Ausführungsform nach Fig. 10 nicht benötigt, weil die angespritzte Laufsohle 41 den gesamten Bereich der Sohlenstruktur abdichtet.

Während sich die Ausführungsform nach Fig. 10 nur für Schuhe mit angespritzter Sohle eignet, können die Ausführungsformen nach den Fig. 5 und 7 für nicht angespritzte, das heißt, für angeklebte Sohlen verwendet werden, bei denen es sich um Kunststoffsohlen und damit wasserdichte Sohlen handeln kann, so daß die Dichtungsplatte 39 nicht erforderlich ist, oder um wasserdurchlässige Sohlen, beispielsweise aus Leder, in welchem Fall die Dichtungsplatte 39 zu empfehlen ist, um die Sohlenkonstruktion wasserdicht zu bekommen, wobei die Dichtungsplatte vorzugsweise nicht nur wasserdicht sondern auch wasserdampfdurchlässig ist.

Fig. 12 zeigt eine Teilschnittansicht eines zwickgeklebten Schuhaufbaus mit einer angespritzten Sohle 41, bei der es sich um eine Zwischensohle oder eine Laufsohle handeln kann. Während des Anspritzens der Sohle 41 durchdringt flüssiges Sohlenmaterial das Netzband 17, dringt bis zur Funktionsschicht des Futtermaterials 15 vor und dichtet die Funktionsschicht ab. Ein Gasket oder eine Dichtungsmaterialschicht ist daher nicht erforderlich. Ansonsten stimmt der Aufbau in Fig. 12 mit dem in Fig. 6 gezeigten Aufbau überein.

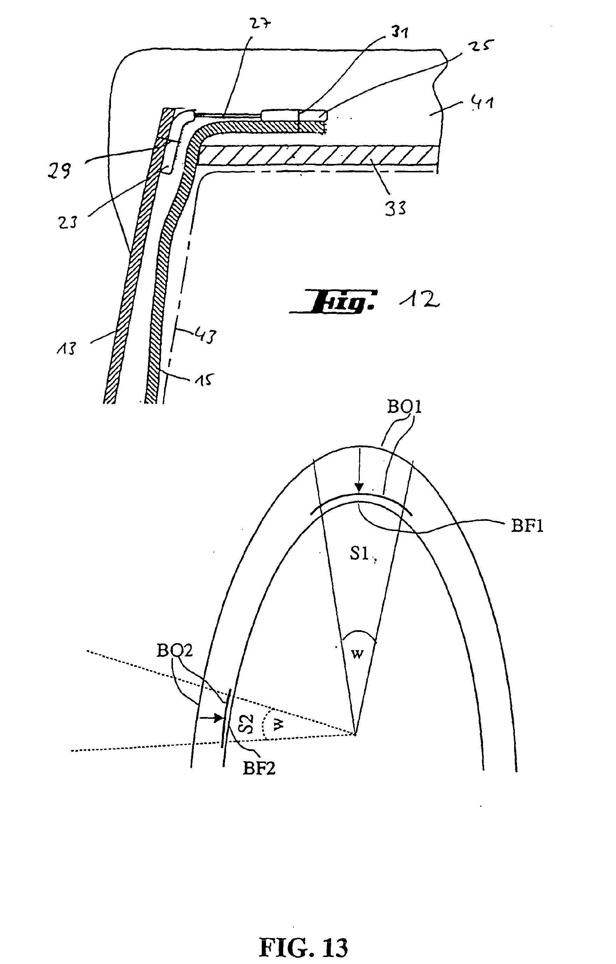

Anhand der Fig. 13 werden nun noch die zuvor verwendeten Begriffe Bogensektor, Bogenlängen und Einheitssektorwinkel erläutert. Fig. 13 zeigt zwei Ellipsenbögen, und zwar einen äußeren und einen inneren Ellipsenbogen, welche die mit dem Obermaterialendbereich verbundene Verbindungsbandlängsseite bzw. die mit dem Futtermaterialendbereich verbundene Verbindungsbandlängsseite darstellen sollen. An einer Stelle starker Ellipsenkrümmung und an einer Stelle schwacher Ellipsenkrümmung ist mittels der beiden Strahlen eines Winkels je ein Bogensektor S1 bzw. ein Bogensektor S2 gebildet. Beide Bogensektoren S1 und S2 weisen denselben Winkel w auf, der hier als Einheitssektorwinkel bezeichnet wird. Die Winkelstrahlen des Bogensektors S1 begrenzen eine äußere Bogenlänge BO1 der äußeren Ellipse und eine innere Bogenlänge BF1 der inneren Ellipse. Dabei steht BO für Bogenlänge des Obermaterials und BF für die Bogenlänge des Futtermaterials. Die Winkelstrahlen des Bogensektors S2 begrenzen eine äußere Bogenlänge BO2 der äußeren Ellipse und eine innere Bogenlänge BF2 der inneren Ellipse. Die Bogenlängen BO1 und BO2 sind dupliziert und als dicke Linien dicht zur Bogenlänge BF1 bzw. BF2 verschoben, um die Längenunterschiede zwischen BO1 und BF1 einerseits und zwischen BO2 und BF2 andererseits deutlich zu machen. Man sieht einerseits, dass Längenunterschiede zwischen den äußeren und den inneren Bogenlängen des jeweiligen Sektors bestehen, und andererseits, dass dieser Längenunterschied an der Stelle stärkerer Ellipsenkrümmung deutlich größer ist als an der Stelle schwächerer Ellipsenkrümmung.

Bei der Verwendung herkömmlichen Netzbandes, welches diese Längenunterschiede nicht ausgleichen kann, wird Faltenbildung verursacht. Bei der Verwendung erfindungsgemäßen Verbindungsbandes, mittels welchem solche Längenunterschiede ausgeglichen werden können, wird die Faltenbildung vermieden. Dass die Unterschiede zwischen äußeren und inneren Bogenlängen an Stellen mit unterschiedlich starker Ellipsenkrümmung verschieden sind, zeigt einerseits, dass das herkömmlich verwendete konische Verbindungsband die Faltenbildung nicht vermeiden kann, und zeigt andererseits, dass ein elastisches Netzband, mit welchem ein Bogenlängenausgleich auch bei unterschiedlich großen Differenzen zwischen äußerer und innerer Bogenlänge problemlos und einfach hergestellt werden kann, besonders zu bevorzugen ist.

Im Fall der Verwendung eines elastischen Verbindungsbandes sollte dieses eine Mindestelastizität, das heißt Mindestdehnbarkeit vor dem Erreichen der plastischen Verformung haben, um auch an Stellen starker Krümmung des Schaftenbereichsumfangs die Anpassung an die unterschiedlichen Bogenlängen an den Umfangsrändern von Obermaterialendbereich und Futtermaterialendbereich und damit an den beiden Längsseiten des elastischen Verbindungsbandes zu erreichen. Die elastische Dehnbarkeit sollte so groß sein, daß das elastische Verbindungsband mit ausreichender Längsdehnungsvorspannung an das Schaftobermaterial angenäht werden kann, um Faltenbildung im Verbindungsband und dem damit vernähten Schaftfuttermaterial zu verhindern. Die elastische Rückstellkraft des elastischen Verbindungsbandes sollte ausreichend sein, um dem Verbindungsband die zum Bogenlängenausgleich erforderliche Vorspannkraft zur Verfügung zu stellen. Generelle Werte oder Grenzen für die Elastizität, die Längsdehnungsvorspannung und die elastische Rückstellkraft können nicht gegeben werde, da diese von der speziellen Schuhform und den damit einhergehenden maximalen Krümmungen des Schaftenbereichsumfangs abhängen. Es dürfte aber für den einschlägigen Fachmann ein Leichtes sein, für einen speziellen Schuh die geeigneten Elastizitätsparameter des Verbindungsbandes zu ermitteln und auszuwählen.

Als elastisches Material für den elastischen Längssteg oder die elastischen Längsstege des elastischen Verbindungsbandes eignen sich insbesondere Kautschuk, Gummi, elastische Kunststoffe wie beispielsweise synthetischer Kautschuk, PVC, Silikon, PU, und textile Materialien, in welche Gummifäden und/oder Fäden aus solchen Materialien eingearbeitet sind.

Das elastische Verbindungsband hat eine Dehnbarkeit von mindestens etwa 20 %. Vorzugsweise hat das Verbindungsband eine Dehnbarkeit von mindestens etwa 30 %, besonders bevorzugt von mindestens etwa 40 % und ganz besonders bevorzugt von mindestens etwa 50 %. Diese Dehnbarkeitswerte weisen dabei einen elastischen Dehnungsanteil von mindestens 40 % auf. Vorzugsweise beträgt der elastische Dehnungsanteil 100 %. Insbesondere hat mindestens der mit dem Futtermaterialendbereich zu verbindende Längssteg des elastischen Verbindungsbandes eine möglichst hohe elastische Dehnbarkeit, um an den eine starke Krümmung aufweisenden Stellen des unteren Schaftendbereichsumfangs die gewünschte Faltenfreiheit zu erreichen.

Bei einem praktischen Beispiel eines für die Erfindung verwendeten elastischen Netzbandes mit den bereits genannten Abmessungen (Netzbandbreite 10 mm, Längsstegbreiten je etwa 3,5 mm, Quersteglänge etwa 3 mm, Querstegabstände etwa 0,25 mm) und den bereits genannten Materialien (Längsstege: gewebtes, elastisches Band mit Kett- oder Längsfäden aus Naturgummi und texturierten Polyamidfäden mit einer Materialzusammensetzung von 40 % Naturgummi, 40 % Monofilpolyamid und 20 % texturiertes Polyamid; Querstege: Polyester) haben sich aus den Messungen mehrerer Proben folgende gerundete Mittelwerte ergeben:
- Dehnung von 66 % bei einer Dehnkraft von 50 N
- Dehnung von 85 % bei einer Dehnkraft von 100 N
- Dehnung von 100 % bei einer Dehnkraft von 150 N
- Bruchdehnungvon 124 % bei
einer Dehnkraft von 206 N

Im Vergleich dazu weist ein Netzband, wie es bei herkömmlichem Schuhwerk verwendet wird und welches eine Breite von ebenfalls 10 mm aufweist, folgende, ebenfalls aus drei Proben gemittelte Werte auf:
- Dehnung von 4 % bei einer Dehnkraft von 50 N
- Dehnung von 10 % bei einer Dehnkraft von 100 N
- Dehnung von 15 % bei einer Dehnkraft von 150 N
- Bruchdehnung von 30 % bei
einer Dehnkraft von 360 N

Werte für die Elastizität und die Rückstellkraft werden bestimmt durch Zugprüfungsmessungen nach der Europäischen Norm EN ISO 13934-1 vom April 1999 unter Verwendung eines Instron-Prüfgerätes (wobei Istron ein Herstellername ist).

Hinsichtlich Dehnung und Elastizität werden für die vorliegende Anmeldung folgende für den Textilbereich aufgestellte Definitionen übernommen.

### Dehnung:

Durch Zugbeanspruchung eines Materials tritt - bezogen auf dessen Ausgangslänge - eine Dehnung auf. Unterschieden wird zwischen Bruchdehnung, elastischer Dehnung und bleibender Dehnung. Bei der Bruchdehnung wird die Längung zum Zeitpunkt des Bruchs bestimmt. Bei einer Belastung unterhalb der Bruchgrenze erfolgt eine Dehnung, die bei Entlastung des Materials wieder zurückgeht (elastische Dehnung), im Gegensatz zur nicht reversiblen bleibenden Dehnung, die zur Formänderung des Materials führt.

### Elastizität:

Fähigkeit eines Materials, die durch Einwirkung einer Kraft (Biegung, Druck, Zug etc.) verursachte Formveränderung beim Nachlassen der Krafteinwirkung rückgängig zu machen.

## Patentansprüche

1. Schuhschaft, aufweisend:
ein Schaftobermaterial (13) mit einem in einem unteren Schaftendbereich befindlichen unteren Obermaterialendbereich (19),
ein eine wasserdichte Funktionsschicht aufweisendes, auf der Innenseite des Schaftobermaterials (13) angeordnetes Schaftfuttermaterial mit einem unteren Futtermaterialendbereich (21), wobei der Futtermaterialendbereich (21) einen nicht von Schaftobermaterial (13) bedeckten Futterrand aufweist,
und ein in Schaftendbereichsumfangsrichtung umlaufendes Verbindungsband (17), das an einer ersten Längsseite (23) mit dem Obermaterialendbereich (19), jedoch nicht mit dem Futtermaterialendbereich (21), und an einer zweiten Längsseite mit dem Futtermaterialendbereich (21), jedoch nicht mit dem Obermaterialendbereich (19) verbunden ist,
wobei das Verbindungsband (17) an Krümmungsstellen des unteren Schaftendbereichsumfangs einen dem örtlichen Krümmungsradius entsprechenden bogenförmigen Verlauf mit unterschiedlich starker Krümmung der beiden Verbindungsbandlängsseiten aufweist, derart, dass für einen in der jeweiligen Krümmung liegenden Bogensektor mit vorgegebenem Einheitssektorwinkel sich die zu diesem Bogensektor gehörenden Bogenlängen der beiden Verbindungsbandlängsseiten um so stärker voneinander unterscheiden, je stärker die Krümmung in dem jeweils betrachteten Bogensektor ist, wobei an Stellen mit konvexer Krümmung des unteren Schaftendbereichsumfangs die Bogenlänge der ersten Verbindungsbandlängsseite länger ist als die Bogenlänge der zweiten Verbindungsbandlängsseite, und zwar entsprechend den unterschiedlichen Krümmungen und Bogenlängen von Obermaterialendbereich und Futtermaterialendbereich.

2. Schuhschaft nach Anspruch 1, bei welchem an Stellen des Schaftendbereichsumfangs mit konkaver Krümmung die Bogenlänge der zweiten Verbindungsbandlängsseite länger ist als die Bogenlänge der ersten Verbindungsbandlängsseite.

3. Schuhschaft nach Anspruch 1 oder 2, bei welchem der nicht von Schaftobermaterial (13) bedeckte Futterrand durch einen Überstand des Futtermaterialendbereichs (21) gegenüber dem Obermaterialendbereich (19) gebildet ist.

4. Schuhschaft nach einem der Ansprüche 1 bis 3, mit einem im wesentlichen steifen Verbindungsband, in das die von der jeweiligen Bogenkrümmung abhängenden Bogenlängenunterschiede der beiden Verbindungsbandlängsseiten durch entsprechende Herstellung eingearbeitet sind.

5. Schuhschaft nach Anspruch 4, mit einem gestanzten Verbindungsband.

6. Schuhschaft nach Anspruch 4, mit einem gespritzten Verbindungsband.

7. Schuhschaft nach einem der Ansprüche 1 bis 3, mit einem elastischen Verbindungsband, das an seiner ersten Längsseite (23) unter Längsdehnungsvorspannung mit dem Obermaterialendbereich (19) verbunden ist.

8. Schuhschaft nach einem der Ansprüche 1 bis 3, mit einem verformbaren Verbindungsband, das an seiner ersten Längsseite (23) unter zu plastischer Verformung führender Längsdehnungsvorspannung mit dem Obermaterialendbereich (19) verbunden ist.

9. Schuhschaft nach einem der Ansprüche 1 bis 3, 7 und 8, bei welchem das Verbindungsband (17) an seiner zweiten Längsseite unter Längsdehnungsvorspannung mit dem Futtermaterialendbereich (21) verbunden ist.

10. Schuhschaft nach einem der Ansprüche 1 bis 9, bei welchem die erste Längsseite (23) des Verbindungsbandes (17) mit dem Obermaterialendbereich (19) vernäht ist.

11. Schuhschaft nach einem der Ansprüche 1 bis 10, bei welchem die zweite Längsseite (25) des Verbindungsbandes (17) mit dem Futtermaterialendbereich (21) vernäht ist.

12. Schuhschaft nach einem der Ansprüche 1 bis 11, dessen Verbindungsband (17) nicht-porös ist.

13. Schuhschaft nach Anspruch 12, dessen Verbindungsband (17) mit einem Dichtungsmaterial aufgebaut ist, das mittels Aktivierungsenergie, ausgewählt aus den Energieformen Wärmeenergie, Hochfrequenzenergie, Infrarotenergie und UV-Energie, zu einem vorübergehend flüssigen Zustand aktivierbar ist.

14. Schuhschaft nach Anspruch 12 für Schuhwerk mit angespritzter Sohle, dessen Verbindungsband (17) aus einem Material besteht, das von beim Anspritzen der Sohle heißflüssigem Sohlenmaterial schmelzbar ist.

15. Schuhschaft nach einem der Ansprüche bis 12 bis 14, dessen Verbindungsband (17) durch einen Polyurethanstreifen gebildet ist.

16. Schuhschaft nach einem der Ansprüche 1 bis 11, dessen Verbindungsband (17) porös ist, derart, dass es von flüssigem Dichtungsmaterial (37; 41) durchdringbar ist.

17. Schuhschaft nach Anspruch 16, dessen Verbindungsband (17) durch ein Netzband gebildet ist, das an seiner ersten Längsseite einen ersten Längssteg (23) und an seiner zweiten Längsseite einen zweiten Längssteg (25) aufweist, die über Querstege (27) miteinander verbunden sind.

18. Schuhschaft nach Anspruch 17, bei welchem mindestens der zweite Längssteg (25) mit elastisch nachgiebigem Material aufgebaut ist.

19. Schuhschaft nach Anspruch 17 oder 18, bei welchem die Querstege (27) mit nicht-elastischem Material aufgebaut sind.

20. Schuhschaft nach einem der Ansprüche 17 bis 19, bei welchem das Netzband gewebt ist, wobei als Kettfäden dienende Längsfäden, von denen wenigstens hinsichtlich des ersten Längssteges (23) mindestens ein Teil elastisch ist, nur in den Bereichen der Längsstege (23, 25) vorhanden sind und die Querstege (27) durch Schussfäden gebildet sind.

21. Schuhschaft nach einem der Ansprüche 1 bis 20, bei welchem der Futtermaterialendbereich (21) und die zweite Längsseite (25) des Verbindungsbandes (17) mit einem Schnurzugtunnel (47) verbunden sind, in dem eine relativ zum Schnurzugtunnel (47) längsbewegliche Zurrschnur (49) angeordnet ist, durch deren Zusammenzurren der untere Schaftendbereich derart in Richtung nach innen gespannt ist, dass der untere Schaftendbereich mit dem Futterrand und dem Verbindungsband (17) in Erstreckungsrichtung einer noch aufzubringenden Laufsohle (41) verlaufen.

22. Schuhschaft nach einem der Ansprüche 1 bis 21, dessen Funktionsschicht wasserdampfdurchlässig ist.

23. Schuhschaft nach Anspruch 22, dessen Funktionsschicht eine Schicht aus mikroporösem PTFE aufweist.

24. Schuhschaft nach einem der Ansprüche 8 bis 23, dessen Verbindungsband (17) eine Dehnbarkeit von wenigstens 20 % aufweist.

25. Schuhwerk mit einem Schuhschaft nach einem der Ansprüche 1 bis 24.

26. Schuhwerk nach Anspruch 25, mit einem Dichtungsmaterial (37; 41), welches den Futtermaterialendbereich (21) in einer im Bereich des Verbindungsbandes (17) befindlichen, in Schaftendbereichsumfangsrichtung umlaufenden Dichtungsmaterialzone wasserdicht abdichtet.

27. Schuhwerk nach Anspruch 26 mit angespritzter Sohle, dessen Dichtungsmaterial durch beim Anspritzen der Sohle flüssiges Sohlenmaterial (41) gebildet ist, welches unter Durchdringung des porösen Verbindungsbandes (17) mindestens einen Teil der Breite des nicht von Schafftobermaterial abgedeckten Futterrandes wasserdicht abdichtet.

28. Schuhwerk nach Anspruch 26, dessen Dichtungsmaterial (37) durch im ausgehärteten Zustand zu Wasserdichtigkeit führendem Klebstoff gebildet ist, welcher unter Durchdringung des porösen Verbindungsbandes (17) mindestens einen Teil der Breite des nicht von Schafftobermaterial abgedeckten Futterrandes wasserdicht abdichtet.

29. Schuhwerk nach Anspruch 28, mit Dichtungsmaterial (37) in Form von Reaktivschmelzklebstoff, der im ausreagierten Zustand zu Wasserdichtigkeit führt.

30. Schuhwerk nach einem der Ansprüche 25 bis 29 mit einer Brandsohle (33), wobei der untere Schaftendbereich mit dem Futterrand und dem Verbindungsband (17) in Erstreckungsrichtung der Brandsohle (33) verlaufen.

31. Schuhwerk nach Anspruch 30, bei welchem die Brandsohle (33) mit dem Futtermaterialendbereich (21) und der zweiten Längsseite des Verbindungsbandes (17) über eine Strobelnaht (35) verbunden ist.

32. Schuhwerk nach Anspruch 30, bei welchem der untere Schaftendbereich mittels Zwickklebstoffs (45) auf einen unteren Umfangsrand der Brandsohle (33) gezwickt ist.

33. Schuhwerk nach einem der Ansprüche 25 bis 32, mit einer flächigen wasserdichten Dichtungsschicht, die parallel zu einer noch aufzubringenden Sohle (41) sich erstreckend derart auf die Unterseite eines umgeschlagenen Schaftendbereichs aufgebracht ist, dass eine untere Schaftöffnung bis zu der Dichtungsmaterialzone hin abgedichtet ist.

34. Schuhwerk nach Anspruch 33, bei welchem die Dichtungsschicht durch eine Dichtungsplatte (39) gebildet ist, die auf die Brandsohlenunterseite geklebt ist.

35. Schuhwerk nach Anspruch 34, dessen Dichtungsplatte (39) eine wasserdichte Funktionsschicht aufweist.

36. Verfahren zur Herstellung eines Schuhschaftes, der mit einem Schaftobermaterial (13) und einem auf der Innenseite des Schaftobermaterials (13) angeordneten, eine wasserdichte Funktionsschicht aufweisenden Futtermaterial (15) aufgebaut ist, mit folgenden Herstellungsschritten:
es wird ein in Schaftform geschnittenes Schaftobermaterialstück bereit gestellt;
es wird ein in Schaftform geschnittenes Futtermaterialstück derartigen Zuschnitts bereit gestellt, dass ein unterer Endbereich des Futtermaterialstücks nach der lagegerechten Anordnung des Futtermaterialstücks auf der Innenseite des Schaftobermaterialstücks einen nicht von Schaftobermaterial (13) bedeckten Futterrand aufweist;
der untere Rand des Schaftobermaterialstücks wird über seinen gesamten Umfang mit einer ersten Längsseite (23) eines Verbindungsbandes (17) vernäht;
ein unteres Ende des Futterrandes wird über seinen gesamten Umfang mit einer zweiten Längsseite des Verbindungsbandes (17) vernäht;
wobei das Verbindungsband (17) an Krümmungsstellen des unteren Schaftendbereichsumfangs mit einem dem örtlichen Krümmungsradius entsprechenden bogenförmigen Verlauf mit unterschiedlich starker Krümmung der beiden Verbindungsbandlängsseiten versehen wird, derart, dass für einen in der jeweiligen Krümmung liegenden Bogensektor mit vorgegebenem Einheitssektorwinkel sich die zu diesem Bogensektor gehörenden Bogenlängen der beiden Verbindungsbandlängsseiten um so stärker voneinander unterscheiden, je stärker die Krümmung in dem jeweils betrachteten Bogensektor ist, wobei an Stellen mit konvexer Krümmung des unteren Schaftendbereichsumfangs die Bogenlänge der ersten Verbindungsbandlängsseite länger gemacht wird als die Bogenlänge der zweiten Verbindungsbandlängsseite, und zwar entsprechend den unterschiedlichen Krümmungen und Bogenlängen von Obermaterialendbereich und Futtermaterialendbereich.

37. Verfahren nach Anspruch 36, bei welchem an Stellen des Schaftendbereichsumfangs mit konkaver Krümmung die Bogenlänge der zweiten Verbindungsbandlängsseite länger gemacht wird als die Bogenlänge der ersten Verbindungsbandlängsseite.

38. Verfahren nach Anspruch 36 oder 37, bei welchem der nicht von Schaftobermaterial (13) bedeckte Futterrand durch einen Überstand des Futtermaterialendbereichs (21) gegenüber dem Obermaterialendbereich (19) gebildet wird.

39. Verfahren nach einem der Ansprüche 36 bis 38, unter Verwendung eines im wesentlichen steifen Verbindungsbandes, in das die von der jeweiligen Bogenkrümmung abhängenden Bogenlängenunterschiede der beiden Verbindungsbandlängsseiten durch entsprechende Herstellung eingearbeitet sind.

40. Verfahren nach Anspruch 39, unter Verwendung eines gestanzten Verbindungsbandes.

41. Verfahren nach Anspruch 39, unter Verwendung eines gespritzten Verbindungsbandes.

42. Verfahren nach einem der Ansprüche 36 bis 38, unter Verwendung eines elastischen Verbindungsbandes, das an seiner ersten Längsseite (23) unter Längsdehnungsvorspannung mit dem Obermaterialendbereich (19) verbunden ist.

43. Verfahren nach einem der Ansprüche 36 bis 38, unter Verwendung eines verformbaren Verbindungsbandes (17), das an seiner ersten Längsseite (23) unter zu plastischer Verformung führender Längsdehnungsvorspannung mit dem Obermaterialendbereich (19) verbunden wird.

44. Verfahren nach einem der Ansprüche 36 bis 38, 42 und 43, bei welchem das untere Ende des Futterrandes unter zu elastischer Verformung führender Längsdehnungsvorspannung des Verbindungsbandes (17) mit der zweiten Längsseite des elastischen Verbindungsbandes (17) vernäht wird.

45. Verfahren nach einem der Ansprüche 36 bis 44, unter Verwendung eines Verbindungsbandes (17), das mit einem Dichtungsmaterial aufgebaut ist, das mittels Aktivierungsenergie, ausgewählt aus den Energieformen Wärmeenergie, Hochfrequenzenergie, Infrarotenergie und UV-Energie, zu einem vorübergehend flüssigen Zustand aktivierbar ist.

46. Verfahren nach einem der Ansprüche 36 bis 44, unter Verwendung eines Verbindungsbandes (17) aus einem Material, das von beim Anspritzen der Sohle (41) heißflüssigem Sohlenmaterial schmelzbar ist.

47. Verfahren nach Anspruch 45 oder 46, unter Verwendung eines durch einen Polyurethanstreifen gebildeten Verbindungsbandes (17).

48. Verfahren nach einem der Ansprüche 36 bis 44, unter Verwendung eines porösen Verbindungsbandes (17), das von flüssigem Dichtungsmaterial (37; 41) durchdringbar ist.

49. Verfahren nach einem der Ansprüche 36 bis 44, bei welchem als Verbindungsband (17) ein Netzband verwendet wird, das an seiner ersten Längsseite einen ersten Längssteg (23) und an seiner zweiten Längsseite einen zweiten Längssteg (25) aufweist, die über Querstege (27) miteinander verbunden sind.

50. Verfahren nach Anspruch 49, wobei ein Netzband verwendet wird, bei welchem mindestens der zweite Längssteg (25) mit elastisch nachgiebigem Material aufgebaut ist.

51. Verfahren nach einem Anspruch 49 oder 50, wobei ein Netzband verwendet wird, bei welchem die Querstege (27) mit nicht-elastischem Material aufgebaut sind.

52. Verfahren nach einem der Ansprüche 36 bis 51, bei welchem ein Verbindungsband (17) mit einer Dehnbarkeit von wenigstens 20 % verwendet wird.

53. Verfahren nach einem der Ansprüche 36 bis 52, bei welchem das untere Ende des Futterrandes und die zweite Längsseite (25) des Verbindungsbandes (17) mit einem Schnurzugtunnel (47), der eine relativ zum Schnurzugtunnel (47) längsbewegliche Zurrschnur (49) aufnimmt, verbunden werden und ein unterer Schaftendbereich mit dem Futterrand und dem Verbindungsband (17) durch Zusammenzurren der Zurrschnur (49) derart in Richtung nach innen gespannt wird, dass der untere Schaftendbereich mit dem Futterrand und dem Verbindungsband (17) in Erstreckungsrichtung einer noch aufzubringenden Sohle (41) verlaufen.

54. Verfahren nach einem der Ansprüche 36 bis 53, bei welchem die Funktionsschicht des Futtermaterialendbereichs (21) mindestens in einer im Bereich des Verbindungsbandes (17) befindlichen, in Schaftendbereichsumfangsrichtung umlaufenden Dichtungsmaterialzone mit einem Dichtungsmaterial (37; 41) wasserdicht abgedichtet wird.

55. Verfahren zur Herstellung von Schuhwerk, bei welchem ein Schaft nach dem Verfahren nach einem der Ansprüche 36 bis 53 hergestellt und die Funktionsschicht des Futtermaterialendbereichs (21) mindestens in einer im Bereich des Verbindungsbandes (17) befindlichen, in Schaftendbereichsumfangsrichtung umlaufenden Dichtungsmaterialzone mit einem Dichtungsmaterial (37; 41) wasserdicht abgedichtet wird.

56. Verfahren nach Anspruch 55, bei welchem an den Schaft (11) eine Sohle (41) aus beim Anspritzen flüssigem Sohlenmaterial angespritzt wird, welches unter Durchdringung des porösen Verbindungsbandes (17) mindestens einen Teil der Breite des nicht von Schafftobermaterial (13) abgedeckten Futterrandes wasserdicht abdichtet.

57. Verfahren nach Anspruch 55, unter Verwendung eines Dichtungsmaterials (37) in Form eines im ausgehärteten Zustand zu Wasserdichtigkeit führendem Dichtungsklebstoffs, welcher unter Durchdringung des porösen Verbindungsbandes (17) mindestens einen Teil der Breite des nicht von Schafftobermaterial (13) abgedeckten Futterrandes wasserdicht abdichtet.

58. Verfahren nach Anspruch 57, unter Verwendung eines Dichtungsmaterials (37) in Form von Reaktivschmelzklebstoff, der im ausreagierten Zustand zu Wasserdichtigkeit führt.

59. Verfahren nach einem der Ansprüche 55 bis 58, bei welchem ein den Futterrand und das Verbindungsband (17) aufweisender unterer Schaftendbereich derart ausgerichtet wird, dass er in Erstreckungsrichtung einer noch aufzubringenden Laufsohle (41) verläuft, und der untere Schaftendbereich mit einer Brandsohle (33) verbunden wird.

60. Verfahren nach Anspruch 59, bei welchem die Brandsohle (33) mit dem Futterrand und der zweiten Längsseite des Verbindungsbandes (17) über eine Strobelnaht (35) verbunden wird.

61. Verfahren nach Anspruch 59, bei welchem der untere Schaftendbereich mittels Zwickklebstoffs (45) auf einen unteren Umfangsrand der Brandsohle (33) gezwickt wird.

62. Verfahren nach einem der Ansprüche 55 bis 61, bei welchem auf die Unterseite des in Sohlenerstreckungsrichtung umgeschlagenen Schaftendbereichs eine flächige wasserdichte Dichtungsschicht aufgebracht wird, die eine untere Schaftöffnung bis zu der Dichtungsmaterialzone hin abgedichtet.

63. Verfahren nach Anspruch 62, bei welchem als Dichtungsschicht eine Dichtungsplatte (39) auf die Brandsohlenunterseite geklebt wird.

## Claims

1. A shoe upper comprising:
an upper outer material (13) having a lower outer-material end region (19) located in a lower upper end region,
upper lining material having a waterproof functional layer and being located on the inside of the upper outer material (13) and having a lower lining-material end region (21) which has a lining edge that is not covered by upper outer material (13),
and a connecting band (17) extending in peripheral direction of the upper end region and being connected on a first longitudinal side (23) to the outer-material end region (19), but not to the lining-material end region (21), and being connected on a second longitudinal side to the lining-material end region (21), but not to the outer-material end region (19),
the connecting band (17) having at curved locations of the lower upper end region periphery a curved path corresponding to the local radius of curvature with different curvatures of the two connecting band longitudinal sides such that for an arc sector located in the respective curvature and having a predetermined unit sector angle, the arc lengths of the two connecting band longitudinal sides belonging to this arc sector are increasingly different from each other with increasing curvature in the respective arc sector considered, with the arc length of the first connecting band longitudinal side being longer than the arc length of the second connecting band longitudinal side at locations with convex curvature of the lower upper end region periphery, in correspondence with the different curvatures and arc lengths of outer-material end region and lining-material end region.

2. A shoe upper according to claim 1,
wherein at locations of the upper end region periphery with concave curvature, the arc length of the second connecting band longitudinal side is longer than the arc length of the first connecting band longitudinal side.

3. A shoe upper according to claim 1 or 2,
wherein the lining edge not covered by upper outer material (13) is constituted by a projecting length of the lining-material end region (21) with respect to the outer-material end region (19).

4. A shoe upper according to any of claims 1 to 3,
comprising a substantially rigid connecting band in which the arc length differences of the two connecting band longitudinal sides, which are dependent upon the respective arc curvature, are incorporated by corresponding manufacture.

5. A shoe upper according to claim 4,
comprising a punched connecting band.

6. A shoe upper according to claim 4,
comprising an injection-moulded connecting band.

7. A shoe upper according to any of claims 1 to 3,
comprising an elastic connecting band connected on the first longitudinal side (23) thereof to the outer-material end region (19) with a longitudinal expansion bias.

8. A shoe upper according to any of claims 1 to 3,
comprising a deformable connecting band connected on the first longitudinal side (23) thereof to the outer-material end region (19) with a longitudinal expansion bias resulting in plastic deformation.

9. A shoe upper according to any of claims 1 to 3, 7 and 8,
wherein the connecting band (17) is connected on the second longitudinal side thereof to the lining-material end region (21) with a longitudinal expansion bias.

10. A shoe upper according to any of claims 1 to 9,
wherein the first longitudinal side (23) of the connecting band (17) is sewn to the outer-material end region (19).

11. A shoe upper according to any of claims 1 to 10,
wherein the second longitudinal side (25) of the connecting band (17) is sewn to the lining-material end region (21).

12. A shoe upper according to any of claims 1 to 11,
wherein the connecting band (17) thereof is non-porous.

13. A shoe upper according to claim 12,
wherein the connecting band (17) thereof is composed with a sealing material that is adapted to be activated into a temporarily liquid state by means of activation energy selected from the energy forms of thermal energy, radio-frequency energy, infrared energy and UV energy.

14. A shoe upper according to claim 12 for footwear with moulded-on sole,
wherein the connecting band (17) thereof consists of a material adapted to be melted by the sole material that is in a hot liquid state during injection-moulding.

15. A shoe upper according to any of claims 12 to 14,
wherein the connecting band (17) thereof is constituted by a polyurethane strip.

16. A shoe upper according to any of claims 1 to 11,
wherein the connecting band (17) thereof is porous such that it may be penetrated by liquid sealing material (37; 41).

17. A shoe upper according to claim 16,
wherein the connecting band (17) thereof is constituted by a net-like band having a first longitudinal web (23) on the first longitudinal side thereof and a second longitudinal web (25) on the second longitudinal side thereof, said webs being connected to each other by transverse webs (27).

18. A shoe upper according to claim 17,
wherein at least the second longitudinal web (25) is composed with elastically resilient material.

19. A shoe upper according to claim 17 or 18,
wherein the transverse webs (27) are composed with non-elastic material.

20. A shoe upper according to any of claims 17 to 19,
wherein the net-like band is woven, with longitudinal threads which serve as warp threads and of which at least part is elastic at least with respect to the first longitudinal web (23), being present only in the regions of the longitudinal webs (23, 25) and the transverse webs (27) being constituted by weft threads.

21. A shoe upper according to any of claims 1 to 20,
wherein the lining-material end region (21) and the second longitudinal side (25) of the connecting band (17) are connected by a lashing string tunnel (47) having a lashing string (49) arranged therein so as to be movable relatively to the lashing string tunnel (47), with lashing together of the lashing string (49) causing the lower upper end region to be pulled inwardly such that the lower upper end region with the lining edge and the connecting band (17) extend in the direction of extension of an outsole (41) that is still to be applied.

22. A shoe upper according to any of claims 1 to 21,
wherein the functional layer thereof is water-vapour permeable.

23. A shoe upper according to claim 22,
wherein the functional layer thereof comprises a layer of microporous PTFE.

24. A shoe upper according to any of claims 8 to 23,
wherein the connecting band (17) thereof has a stretchability of at least 20 %.

25. Footwear comprising a shoe upper according to any of claims 1 to 24.

26. Footwear according to claim 25,
comprising a sealing material (37; 41) providing waterproof sealing to the lining-material end region (25) in a sealing material zone located in the region of the connecting band (17) and extending circumferentially in the direction of the upper end region periphery.

27. Footwear according to claim 26,
comprising a moulded-on sole, with the sealing material of the footwear being constituted by sole material (41) that is liquid during injection-moulding of the sole and which penetrates the porous connecting band (17) and thus seals at least part of the width of the lining edge not covered by upper outer material in waterproof manner.

28. Footwear according to claim 26,
wherein the sealing material (37) thereof is constituted by adhesive which leads to waterproofness in the cured state and which penetrates the porous connecting band (17) so as to seal at least part of the lining edge not covered by the upper outer material in waterproof manner.

29. Footwear according to claim 28,
comprising sealing material (37) in the form of reactive hot-melt adhesive leading to waterproofness in the fully reacted state.

30. Footwear according to any of claims 25 to 29,
comprising an insole (33), with the lower upper end region with the lining edge and the connecting band (17) extending in the direction of extension of the insole (33).

31. Footwear according to claim 30,
wherein the insole (33) is joined to the lining-material end region (21) and the second longitudinal side of the connecting band (17) via a Strobel seam (35).

32. Footwear according to claim 30,
wherein the lower upper end region is lasted to a lower peripheral edge of the insole (33) by means of lasting adhesive (45).

33. Footwear according to any of claims 25 to 32,
comprising a sheet-like waterproof sealing layer applied to the underside of a bent over upper end region so as to extend parallel to a sole (41) still to be applied, such that a lower opening of the upper is sealed up to the sealing material zone.

34. Footwear according to claim 33,
wherein the sealing layer is constituted by a sealing plate (39) adhered to the insole underside.

35. Footwear according to claim 34,
wherein the sealing plate (39) thereof comprises a waterproof functional layer.

36. A method for producing a shoe upper composed with an upper outer material (13) and a lining material (15) arranged on the inside of the upper outer material (13) and having a waterproof functional layer, said method comprising the following steps:
providing an upper outer material piece cut to the shape of the upper;
providing a lining material piece cut to the shape of the upper such that a bottom end region of the lining material piece, upon arrangement of the lining material piece in the correct position on the inside of the upper outer material piece, has a lining edge that is not covered by upper outer material (13);
sewing the bottom edge of the upper outer material piece over the entire periphery thereof to a first longitudinal side (23) of a connecting band (17);
sewing a bottom end of the lining edge over the entire periphery thereof to a second longitudinal side of the connecting band (17);
with the connecting band (17), at curved locations of the lower upper end region periphery, being provided with a curved path of different curvatures of the two connecting band longitudinal sides corresponding to the local radius of curvature, such that, for an arc sector with a predetermined unitsector angle located in the respective curvature, the arc lengths of the two connecting band longitudinal sides belonging to this arc sector differ from each other in increasing manner with increasing curvature in the respective arc sector considered, and at locations with convex curvature of the lower upper end region periphery, the arc length of the first connecting band longitudinal side is made longer than the arc length of the second connecting band longitudinal side, in a manner corresponding to the different curvatures and arc lengths of outer-material end region and lining-material end region.

37. A method according to claim 36,
wherein at locations of the upper end region periphery with concave curvature, the arc length of the second connecting band longitudinal side is made longer than the arc length of the first connecting band longitudinal side.

38. A method according to claim 36 or 37,
wherein the lining edge not covered by upper outer material (13) is constituted by a projecting length of the lining-material end region (21) with respect to the outer-material end region (19).

39. A method according to any of claims 36 to 38,
using a substantially rigid connecting band in which the arc length differences of the two connecting band longitudinal sides, which are dependent upon the respective arc curvature, are incorporated by corresponding manufacture.

40. A method according to claim 39,
using a punched connecting band.

41. A method according to claim 39,
using an injection-moulded connecting band.

42. A method according to any of claims 36 to 38,
using an elastic connecting band connected on the first longitudinal side (23) thereof to the outer-material end region (19) with a longitudinal expansion bias.

43. A method according to any of claims 36 to 38,
using a deformable connecting band (17) connected on the first longitudinal side (23) thereof to the outer-material end region (19) with a longitudinal expansion bias resulting in plastic deformation.

44. A method according to any of claims 36 to 38, 42 and 43,
wherein the lower end of the lining edge is sewn to the second longitudinal side of the elastic connecting band (17) with a longitudinal expansion bias of the connecting band (17) resulting in elastic deformation.

45. A method according to any of claims 36 to 44,
using a connecting band (17) composed with a sealing material that is adapted to be activated into a temporarily liquid state by means of activation energy selected from the energy forms of thermal energy, radio-frequency energy, infrared energy and UV energy.

46. A method according to any of claims 36 to 44,
using a connecting band (17) of a material adapted to be melted by the sole material that is in a hot liquid state during injection-moulding.

47. A method according to claim 45 or 46,
using a connecting band (17) that is constituted by a polyurethane strip.

48. A method according to any of claims 36 to 44,
using a porous connecting band (17) adapted to be penetrated by liquid sealing material (37; 41).

49. A method according to any of claims 36 to 44,
using as connecting band (17) a net-like band having a first longitudinal web (23) on the first longitudinal side thereof and a second longitudinal web (25) on the second longitudinal side thereof, said webs being connected to each other by transverse webs (27).

50. A method according to claim 49,
using a net-like band in which at least the second longitudinal web (25) is composed with elastically resilient material.

51. A method according to claim 49 or 50,
using a net-like band in which the transverse webs (27) are composed with non-elastic material.

52. A method according to any of claims 36 to 51,
using a net-like band (17) with a stretchability of at least 20 %.

53. A method according to any of claims 36 to 52,
wherein the bottom end of the lining edge and the second longitudinal side (25) of the connecting band (17) are connected to a lashing string tunnel (47) accommodating a lashing string (49) so as to be longitudinally movable relatively to the lashing string tunnel (47), and a lower upper end region with the lining edge and the connecting band (17) is pulled inwardly by lashing together of the lashing string (49) such that the lower upper end region with the lining edge and the connecting band (17) extend in the direction of extension of an outsole (41) that is still to be applied.

54. A method according to any of claims 36 to 53,
wherein the functional layer of the lining-material end region (21) is sealed in waterproof manner using a sealing material (37; 41) at least in a sealing material zone located in the region of the connecting band (17) and extending circumferentially in the direction of the upper end region periphery.

55. A method for manufacturing footwear,
in which an upper according to the method of any of claims 36 to 53 is manufactured and the functional layer of the lining-material end region (21) is sealed in waterproof manner using a sealing material (37; 41) at least in a sealing material zone located in the region of the connecting band (17) and extending circumferentially in the direction of the upper end region periphery.

56. A method according to claim 55,
wherein a sole of sole material (41) that is liquid during injection-moulding of the sole is injection-moulded to the upper (11), which material penetrates the porous connecting band (17) so as to seal at least part of the width of the lining edge not covered by upper outer material (13) in waterproof manner.

57. A method according to claim 55,
using a sealing material (37) in the form of a sealing adhesive which leads to waterproofness in the cured state and which penetrates the porous connecting band (17) so as to seal at least part of the lining edge not covered by the upper outer material (13) in waterproof manner.

58. A method according to claim 57,
using a sealing material (37) in the form of reactive hot-melt adhesive leading to waterproofness in the fully reacted state.

59. A method according to any of claims 55 to 58,
wherein a lower upper end region comprising the lining edge and the connecting band (17) is oriented so as to extend in the direction of extension of an outsole (41) still to be applied, and the lower upper end region is connected to an insole (33).

60. A method according to claim 59,
wherein the insole (33) is joined to the lining edge and the second longitudinal side of the connecting band (17) via a Strobel seam (35).

61. A method according to claim 59,
wherein the lower upper end region is lasted to a lower peripheral edge of the insole (33) by means of lasting adhesive (45).

62. A method according to any of claims 55 to 61,
wherein a sheet-like waterproof sealing layer is applied to the underside of the upper end region bent over so as to extend in the direction of the sole extension and seals a lower opening of the upper up to the sealing material zone.

63. A method according to claim 62,
wherein a sealing plate (39) is adhered to the insole bottom side as sealing layer.

## Revendications

1. Tige de chaussure, comportant
une matière de revêtement de la tige (13) avec une zone d'extrémité de la matière de revêtement (19) se trouvant dans la zone d'extrémité inférieure de la tige,
une matière de doublure de la tige disposée sur la face intérieure de la matière de revêtement de la tige (13), comportant une couche fonctionnelle étanche à l'eau, avec une zone d'extrémité inférieure de la matière de doublure (21), la zone d'extrémité de la matière de doublure (21) comportant un bord de doublure non recouvert par la matière de revêtement de la tige (13),
et une bande de liaison (17) périphérique dans le sens de la circonférence de la zone d'extrémité de la tige, qui sur un premier côté longitudinal (23) est reliée avec la zone d'extrémité de la matière de revêtement (19), mais pas avec la zone d'extrémité de la matière de doublure (21) et qui sur un deuxième côté longitudinal est reliée avec la zone d'extrémité de la matière de doublure (21), mais pas avec la zone d'extrémité de la matière de revêtement (19),
la bande de liaison (17) présentant sur des endroits de courbure de la périphérie de la zone d'extrémité inférieure de la tige un trajet courbé correspondant au rayon de courbure local, avec une courbure plus ou moins importante des deux côtés longitudinaux de la bande de liaison, de façon à ce que pour un secteur de cintrage situé dans la courbure respective, avec un angle de secteur unitaire prédéfini, les longueurs de cintrage appartenant à ce secteur de cintrage des deux côtés longitudinaux de la bande de liaison se distinguent d'autant plus entre elles que la courbure est importante dans le secteur de cintrage respectivement considéré, sur des endroits à courbure convexe de la périphérie inférieure de la zone d'extrémité de la tige, la longueur du cintrage du premier côté longitudinal de la bande de liaison étant plus longue que la longueur de cintrage du deuxième côté longitudinal de la bande de liaison, à savoir en fonction des différentes courbures et longueurs de cintrage de la zone d'extrémité de la matière de revêtement et de la zone d'extrémité de la matière de doublure.

2. Tige de chaussure selon la revendication 1, sur laquelle sur des endroits de la périphérie de la zone d'extrémité de la tige à courbure concave, la longueur de cintrage du deuxième côté longitudinal de la bande de liaison est plus longue que la longueur de cintrage du premier côté longitudinal de la bande de liaison.

3. Tige de chaussure selon la revendication 1 ou 2, sur laquelle la zone de doublure non recouverte par la matière de revêtement de la tige (13) est formée par un débordement de la zone d'extrémité de la matière de doublure (21) par rapport à la zone d'extrémité de la matière de revêtement (19).

4. Tige de chaussure selon l'une quelconque des revendications 1 à 3, avec une bande de liaison sensiblement rigide, dans laquelle les différences de longueur de cintrage dépendant de la courbure respective des cintrages des deux côtés longitudinaux de la bande de liaison sont incorporées par une fabrication correspondante.

5. Tige de chaussure selon la revendication 4, avec une bande de liaison découpée.

6. Tige de chaussure selon la revendication 4, avec une bande de liaison injectée.

7. Tige de chaussure selon l'une quelconque des revendications 1 à 3, avec une bande de liaison élastique, qui sur son premier côté longitudinal (23) est reliée avec la zone d'extrémité de la matière de revêtement (19), sous précontrainte par allongement longitudinal.

8. Tige de chaussure selon l'une quelconque des revendications 1 à 3, avec une bande de liaison déformable, qui sur son premier côté longitudinal (23) est reliée avec la zone d'extrémité de la matière de revêtement (19), sous précontrainte par allongement longitudinal provoquant une déformation plastique.

9. Tige de chaussure selon l'une quelconque des revendications 1 à 3, 7 et 8, sur laquelle sur son deuxième côté longitudinal, la bande de liaison (17) est reliée par son deuxième côté longitudinal avec la zone d'extrémité de la matière de doublure (21) sous précontrainte par allongement longitudinal.

10. Tige de chaussure selon l'une quelconque des revendications 1 à 9, sur laquelle le premier côté longitudinal (23) de la bande de liaison (17) est cousu sur la zone d'extrémité de la matière de revêtement (19).

11. Tige de chaussure selon l'une quelconque des revendications 1 à 10, sur laquelle le deuxième côté longitudinal (25) de la bande de liaison (17) est cousu sur la zone d'extrémité de la matière de doublure (21).

12. Tige de chaussure selon l'une quelconque des revendications 1 à 11, dont la bande de liaison (17) n'est pas poreuse.

13. Tige de chaussure -selon la revendication 12, dont la bande de liaison (17) est conçue en une matière d'étanchéité qui au moyen d'une énergie d'activation, choisie parmi les formes énergétiques : énergie thermique, énergie haute fréquence, énergie infrarouge et énergie UV est activable en un état liquide passager.

14. Tige de chaussure selon la revendication 12 pour une chaussure à semelle moulée par injection, dont la bande de liaison (17) est en une matière pouvant être mise en fusion par la matière de semelle thermo-liquide, lors du moulage par injection de la semelle.

15. Tige de chaussure selon l'une quelconque des revendications 12 à 14, dont la bande de liaison (17) est formée par un ruban de polyuréthane.

16. Tige de chaussure selon l'une quelconque des revendications 1 à 11, dont la bande de liaison (17) est poreuse, de façon à pouvoir être pénétrée par de la matière d'étanchéité liquide (37 ; 41).

17. Tige de chaussure selon la revendication 16, dont la bande de liaison (17) est formée par une bande en filet, qui sur son premier côté longitudinal comporte une première barrette longitudinale (23) et sur son deuxième côté longitudinal comporte une deuxième barrette longitudinale (25) qui sont reliées entre elles par l'intermédiaire de barrettes transversales (27).

18. Tige de chaussure selon la revendication 17, sur laquelle au moins la deuxième barrette longitudinale (25) est conçue en une matière flexible élastique.

19. Tige de chaussure selon la revendication 17 ou 18, sur laquelle les barrettes transversales (27) sont conçues en une matière non élastique.

20. Tige de chaussure selon l'une quelconque des revendications 17 à 19, sur laquelle la bande en filet est tissée, des fils longitudinaux faisant office de fils de chaîne, dont au moins par rapport à la première barrette longitudinale (23), au moins une partie est élastique n'étant présents que dans les zones des barrettes longitudinales (23, 25) et les barrettes transversales (27) étant formées par des fils de trame.

21. Tige de chaussure selon l'une quelconque des revendications 1 à 20, sur laquelle la zone d'extrémité de la matière de doublure (21) et le deuxième côté longitudinal (25) de la bande de liaison (17) sont reliés à un tunnel de traction d'une cordelette (47) dans lequel est placée une cordelette de serrage mobile en longueur (49) par rapport au tunnel de traction de la cordelette (47), par serrage de laquelle la zone inférieure d'extrémité de la tige se tend vers l'intérieur, de façon à ce que la zone inférieure d'extrémité de la tige avec le bord de la doublure et la bande de liaison (17) s'étendent dans la zone d'extension d'une semelle de marche (41) qui doit encore être montée.

22. Tige de chaussure selon l'une quelconque des revendications 1 à 21, dont la couche fonctionnelle est perméable à la vapeur d'eau.

23. Tige de chaussure selon la revendication 22, dont la couche fonctionnelle comporte une couche en PTFE microporeux.

24. Tige de chaussure selon l'une quelconque des revendications 8 à 23, dont la bande de liaison (17) a une extensibilité d'au moins 20 %.

25. Chaussure avec une tige de chaussure selon l'une quelconque des revendications 1 à 24.

26. Chaussure selon la revendication 25, avec une matière d'étanchéité (37 ; 41) qui assure l'étanchéité à l'eau de la zone d'extrémité de la matière de doublure (21) dans une zone de matière d'étanchéité située dans la zone de la bande de liaison (17) qui est périphérique dans le sens de la circonférence de la zone d'extrémité de la tige.

27. Chaussure selon la revendication 26, avec une semelle moulée par injection, dont la matière d'étanchéité est formée par une matière à semelle liquide (41) lors du moulage par injection de la semelle, qui en pénétrant dans la bande de liaison poreuse (17) assure l'étanchéité à l'eau d'au moins une partie de la largeur du bord de la doublure non recouverte par de la matière de revêtement de la tige.

28. Chaussure selon la revendication 26, dont la matière d'étanchéité (37) est formée par une matière adhésive assurant l'étanchéité à l'eau à l'état durci, qui en pénétrant dans la bande de liaison poreuse (17) assure l'étanchéité à l'eau d'au moins une partie de la largeur du bord de la doublure non recouverte par de la matière de revêtement de la tige.

29. Chaussure selon la revendication 28, avec une matière d'étanchéité (37) sous forme d'une matière adhésive fusible réactive, qui après réaction assure l'étanchéité à l'eau.

30. Chaussure selon l'une quelconque des revendications 25 à 29, avec une semelle intérieure (33), la zone inférieure de la tige avec le bord de la doublure et la bande de liaison (17) s'étendant dans la zone d'extension de la semelle intérieure (33).

31. Chaussure selon la revendication 30, sur laquelle la semelle intérieure (33) est reliée à la zone d'extrémité de la matière de doublure (21) et au deuxième côté longitudinal de la bande de liaison (17) par une couture Strobel (35).

32. Chaussure selon la revendication 30, sur laquelle la zone d'extrémité inférieure de la tige est montée au moyen d'un adhésif de montage (45) sur une bordure périphérique inférieure de la semelle intérieure (33).

33. Chaussure selon l'une quelconque des revendications 25 à 32, avec une couche d'étanchéité à l'eau à grande surface, qui est appliquée sur la face inférieure d'une zone d'extrémité rabattue de la tige, à la parallèle d'une semelle (41) qui doit encore être montée, de façon à assurer l'étanchéité d'une ouverture inférieure de la tige jusqu'à la zone de matière d'étanchéité.

34. Chaussure selon la revendication 33, sur laquelle la couche d'étanchéité est formée par une plaque d'étanchéité (39) qui est collée sur la face inférieure de la semelle intérieure.

35. Chaussure selon la revendication 34, dont la plaque d'étanchéité (39) comporte une couche fonctionnelle étanche à l'eau.

36. Procédé de fabrication d'une tige de chaussure, constituée d'une matière de revêtement de la tige (13), et-d'une matière de doublure (15) disposée sur la face intérieure de la matière de revêtement de la tige (13) et comportant une couche fonctionnelle, avec les étapes de fabrication suivantes :
on prépare une pièce de matière de revêtement de la tige coupée en forme de tige ;
on prépare une pièce de matière de doublure coupée en forme de tige, d'une découpe telle, qu'après avoir disposé en bonne position la pièce de matière de doublure sur la face intérieure de la pièce de matière de revêtement de la tige, une zone d'extrémité inférieure de la pièce de matière de doublure comporte un bord de doublure non recouvert par de la matière de revêtement de la tige (13) ;
sur toute sa circonférence, on coud le bord inférieur de la pièce de matière de revêtement de la tige sur un premier côté longitudinal (23) d'une bande de liaison (17)
sur toute sa circonférence, on coud une extrémité inférieure du bord de la doublure sur un deuxième côté longitudinal de la bande de liaison (17) ;
la bande de liaison (17) étant munie sur des zones de courbure de la périphérie inférieure de la zone d'extrémité de la tige d'un trajet cintré correspondant au rayon de courbure local, avec une courbure plus ou moins importante des deux côtés longitudinaux de la bande de liaison, de façon à ce que pour un secteur de cintrage situé dans la courbure respective, avec un angle de secteur unitaire prédéfini, les longueurs de cintrage appartenant à ce secteur de cintrage des deux côtés longitudinaux de la bande de liaison se distinguent d'autant plus entre elles que la courbure est importante dans le secteur de cintrage respectivement considéré, sur des endroits à courbure convexe de la périphérie inférieure de la zone d'extrémité de la tige, la longueur du cintrage du premier côté longitudinal de la bande de liaison étant confectionnée pour être plus longue que la longueur de cintrage du deuxième côté longitudinal de la bande de liaison, à savoir en fonction des différentes courbures et longueurs de cintrage de la zone d'extrémité de la matière de revêtement et de la zone d'extrémité de la matière de doublure.

37. Procédé selon la revendication 36, au cours duquel sur des endroits de la circonférence de la zone d'extrémité de la tige à courbure concave, la longueur de cintrage du deuxième côté longitudinal de la bande de liaison est confectionnée pour être plus longue que la longueur de cintrage du premier côté longitudinal de la bande de liaison.

38. Procédé selon la revendication 36 ou 37, au cours duquel la zone de doublure non recouverte par la matière de revêtement de la tige (13) est formée par un débordement de la zone d'extrémité de la matière de doublure (21) par rapport à la zone d'extrémité de la matière de revêtement (19).

39. Procédé selon l'une quelconque des revendications 36 à 38 sous utilisation d'une bande de liaison sensiblement rigide, dans laquelle on incorpore par une fabrication correspondante les différences de longueur de cintrage dépendant de la courbure respective des cintrages des deux côtés longitudinaux de la bande de liaison.

40. Procédé selon la revendication 39, sous utilisation d'une bande de liaison découpée.

41. Procédé selon la revendication 39, sous utilisation d'une bande de liaison injectée.

42. Procédé selon l'une quelconque des revendications 36 à 38, sous utilisation d'une bande de liaison élastique, qu'on relie sur son premier côté longitudinal (23) avec la zone d'extrémité de la matière de revêtement (19), sous précontrainte par allongement longitudinal.

43. Procédé selon l'une quelconque des revendications 36 à 38, sous utilisation d'une bande de liaison déformable (17), qu'on relie sur son premier côté longitudinal (23) avec la zone d'extrémité de la matière de revêtement (19), sous précontrainte par allongement longitudinal provoquant une déformation plastique.

44. Procédé selon l'une quelconque des revendications 36 à 38, 42 et 43, au cours duquel on coud l'extrémité inférieure du bord de la doublure sur le deuxième côté longitudinal (25) de la bande de liaison élastique (17), sous précontrainte d'allongement en longueur de la bande de liaison (17) provoquant une déformation élastique.

45. Procédé selon l'une quelconque des revendications 36 à 44, sous utilisation d'une bande de liaison (17) qui est conçue en une matière d'étanchéité qui au moyen d'une énergie d'activation, choisie parmi les formes énergétiques : énergie thermique, énergie haute fréquence, énergie infrarouge et énergie UV est activable en un état liquide passager.

46. Procédé selon l'une quelconque des revendications 36 à 44, sous utilisation d'une bande de liaison (17) en une matière pouvant être mise en fusion par la matière de semelle thermo-liquide, lors du moulage par injection de la semelle (41).

47. Procédé selon la revendication 45 ou 46, sous utilisation d'une bande de liaison (17) formée par un ruban de polyuréthane.

48. Procédé selon l'une quelconque des revendications 36 à 44, sous utilisation d'une bande de liaison (17) poreuse, pouvant être pénétrée par de la matière d'étanchéité liquide (37 ; 41).

49. Procédé selon l'une quelconque des revendications 36 à 44, au cours duquel on utilise en tant que bande de liaison (17) une bande en filet, qui sur son premier côté longitudinal comporte une première barrette longitudinale (23) et sur son deuxième côté longitudinal comporte une deuxième barrette longitudinale (25) qui sont reliées entre elles par l'intermédiaire de barrettes transversales (27).

50. Procédé selon la revendication 49, en utilisant une bande en filet sur laquelle au moins la deuxième barrette longitudinale (25) est conçue en une matière flexible élastique.

51. Procédé selon la revendication 49 ou 50, en utilisant une bande en filet sur laquelle les barrettes transversales (27) sont conçues en une matière non élastique.

52. Procédé selon l'une quelconque des revendications 36 à 51, au cours duquel on utilise une bande de liaison (17) avec une extensibilité d'au moins 20 %.

53. Procédé selon l'une quelconque des revendications 36 à 52, au cours duquel on relie l'extrémité inférieure du bord de la doublure et le deuxième côté longitudinal (25) de la bande de liaison (17) avec un tunnel de traction d'une cordelette (47) réceptionnant une cordelette de serrage mobile en longueur (49) par rapport au tunnel de traction de cordelette (47), et par serrage de la cordelette de serrage (49), on tend vers l'intérieur une zone inférieure d'extrémité de la tige avec le bord de la doublure et la bande de liaison (17), de façon à ce que la zone inférieure d'extrémité de la tige avec le bord de la doublure et la bande de liaison (17) s'étendent dans le sens d'extension d'une semelle de marche (41) qui doit encore être montée.

54. Procédé selon l'une quelconque des revendications 36 à 53, au cours duquel on assure l'étanchéité à l'eau de la couche fonctionnelle de la zone d'extrémité de la matière de doublure (21) au moins dans une zone de matière d'étanchéité se trouvant dans la région de la bande de liaison (17) s'étendant dans le sens périphérique de l'extrémité de la tige à l'aide d'une matière d'étanchéité (37 ; 41).

55. Procédé de fabrication de chaussures, au cours duquel on fabrique une tige selon le procédé selon l'une quelconque des revendications 36 à 53 et on assure l'étanchéité à l'eau de la couche fonctionnelle de la zone d'extrémité de la matière de doublure (21) au moins dans une zone de matière d'étanchéité se trouvant dans la région de la bande de liaison (17) s'étendant dans le sens périphérique de l'extrémité de la tige à l'aide d'une matière d'étanchéité (37 ; 41).

56. Procédé selon la revendication 55, au cours duquel on forme par moulage sur la tige (11) une semelle (41) en matière à semelle liquide lors du moulage par injection, qui en pénétrant dans la bande de liaison poreuse (17) assure l'étanchéité à l'eau d'au moins une partie de la largeur du bord de la doublure non recouvert par de la matière de revêtement de la tige (13).

57. Procédé selon la revendication 55, sous utilisation d'une matière d'étanchéité (37) sous la forme d'une matière adhésive d'étanchéité assurant l'étanchéité à l'eau à l'état durci, qui en pénétrant dans la bande de liaison poreuse (17) assure l'étanchéité à l'eau d'au moins une partie du bord de la doublure non recouvert par de la matière de revêtement de la tige (13).

58. Procédé selon la revendication 57, sous utilisation d'une matière d'étanchéité (37) sous la forme d'une matière adhésive fusible réactive, qui après réaction assure l'étanchéité à l'eau.

59. Procédé selon l'une quelconque des revendications 55 à 58, au cours duquel on oriente une zone d'extrémité inférieure de la tige comportant le bord de la doublure et la bande de liaison (17) de façon à ce qu'elle s'étende dans le sens d'extension d'une semelle de marche (41) qui doit encore être montée et on relie la zone d'extrémité inférieure de la tige avec une semelle intérieure (33).

60. Procédé selon la revendication 59, au cours duquel on relie la semelle intérieure (33) avec le bord de la doublure et avec le deuxième côté longitudinal de la bande de liaison (17) par une couture Strobel (35).

61. Procédé selon la revendication 59, au cours duquel on relie la zone inférieure d'extrémité de la tige au moyen d'un adhésif de montage (45) sur un bord périphérique inférieur de la semelle intérieure (33).

62. Procédé selon l'une quelconque des revendications 55 à 61, au cours duquel on applique sur la face inférieure d'une zone d'extrémité de la tige rabattue dans le sens d'extension de la semelle une couche d'étanchéité à l'eau à grande surface, qui assure l'étanchéité d'une ouverture inférieure de la tige jusqu'à la zone de matière d'étanchéité.

63. Procédé selon la revendication 62, au cours duquel pour la couche d'étanchéité, on colle une plaque d'étanchéité (39) sur la face inférieure de la semelle inférieure.
